# FASCICULE DE BREVET EUROPEEN

(11) **EP 3 440 124 B1**
(45) Date de publication et mention de la délivrance du brevet: **21.04.2021**
(21) Numéro de dépôt: 17717798.7
(22) Date de dépôt: 31.03.2017
(51) Int. Cl.: C08J 5/04

(54) **PROCEDE DE FABRICATION DE PIECES EN MATERIAU COMPOSITE AVEC RENFORTS**
VERFAHREN ZUR HERSTELLUNG VON TEILEN AUS EINEM VERBUNDSTOFF MIT VERSTÄRKUNGEN
METHOD FOR PRODUCING PARTS MADE OF A COMPOSITE MATERIAL WITH REINFORCERS

(30) Priorité: 05.04.2016 FR 1652951
(43) Date de publication de la demande: 13.02.2019
(73) Titulaire: Arkema France, 92700 Colombes (FR)
(72) Inventeur: HOCHSTETTER, Gilles, 94240 L'Hay Les Roses (FR); CAPELOT, Mathieu, 27300 Bernay (FR)
(74) Mandataire: A.P.I. Conseil
(86) Numéro de dépôt international: PCT/FR2017/050740
(87) Numéro de publication internationale: WO 2017/191381

(56) Documents cités:
- EP-A1- 2 586 585
- US-A- 5 614 312

## Description

### [Domaine technique de l'invention]

L'invention concerne le domaine des matériaux composites pour la fabrication de pièces à deux ou trois dimensions.

L'invention concerne plus particulièrement un procédé de fabrication de pièces en matériau composite par imprégnation d'un substrat fibreux désigné ci-après préforme au moyen d'une résine polymère faiblement visqueuse suivie d'une opération de moulage, ainsi que les pièces en matériaux composite obtenues par la mise en œuvre d'un tel procédé.

### [Art antérieur]

Un matériau composite est un assemblage d'au moins deux composants non miscibles. Un effet de synergie est obtenu par un tel assemblage, de sorte que le matériau composite obtenu possède des propriétés notamment mécaniques et/ou thermiques que chacun des composants initiaux ne possède pas ou possède mais à un degré inférieur par rapport au matériau composite.

De plus, un matériau composite comprend au moins un matériau de renfort constitué de fibres tissées ou non tissées conférant audit matériau composite de bonnes propriétés mécaniques, notamment une bonne tenue aux efforts mécaniques subis par le matériau composite, et par un matériau de matrice, ou plus simplement matrice, formant une phase continue et assurant la cohésion dudit matériau composite. Parmi les différents types de composites utilisés dans l'industrie, les composites à matrice organique sont les plus représentés. Dans le cas des composites à matrice organique, le matériau de matrice est généralement un polymère. Ce polymère peut être soit un polymère thermodurcissable, soit un polymère thermoplastique. Par exemple, le document US5614312 décrit la fabrication d'un matériau composite par voie humide comportant uniquement des fibres de verres, des fibres carbonées et des fibres thermoplastiques, déposées par voie humide. Le document EP2586585 décrit quant à lui un procédé de fabrication d'un matériau composite comportant un assemblage de plusieurs fibres de renforts synthétiques imprégné d'au moins un polymère thermoplastique.

Ainsi, pour certaines applications, la préparation du matériau composite s'effectue d'abord par la fabrication d'une « préforme ». Une préforme est généralement constituée d'une pluralité de couches de pré-imprégnés. Les pré-imprégnés sont eux-mêmes des matériaux composites comprenant un matériau fibreux tissé ou non tissé constitué par exemple de fibres de carbone ou de fibres de verre, et une matrice polymère constituée d'une résine polymère.

Selon un procédé de type RTM (Resin Transfert Molding) ou C-RTM (Compression Resin Transfert Molding), la préforme est placée dans un moule fermé puis imprégnée par une résine faiblement visqueuse alors injectée dans ledit moule fermé. Cette résine est préférentiellement polymérisée in-situ, après la phase d'imprégnation de la préforme, afin de bien imprégner la préforme. Dans le cas du C-RTM la résine est injecté sur la surface de la préforme et la compression finale du moule force l'imprégnation à cœur de la préforme par la résine. Lors de l'injection et de la compression le moule est fermé et étanche à l'air et même souvent mis sous vide pour favoriser l'imprégnation des fibres.

La compression en voie humide (LCM « liquid compression molding » ou WCM « wet compression molding » opu DFCM « dynamic fluid compression molding ») utilise le même type de préforme mais se différencie du C-RTM par le fait que la résine est déposée directement moule ouvert, sur la préforme déjà positionnée dans le moule, de préférence préalablement chauffé. Le moule est ensuite fermé, ce qui, comme dans le cas du C-RTM, force l'imprégnation à cœur de la préforme par la résine. Cette phase est suivie d'une polymérisation in situ de la résine.

Dans ces différents procédés, la préforme est un matériau intermédiaire dont la forme correspond à celle de la pièce composite finale.

Dans une autre version, la compression en voie humide (LCM ou WCM ou DFCM) utilise une préforme plate, composée d'un assemblage de semi-produits plats partiellement pré-imprégnés de résine et qui sera mis en forme lors de l'opération finale de fabrication de la pièce composite. La pré-imprégnation de la préforme au taux final de résine, se fait alors hors du moule par une résine liquide.

Lorsque la résine non totalement polymérisée est déposée sur la préforme hors moule ou moule ouvert, on parlera pour simplifier de procédé moule ouvert.

Les pièces en matériaux composite obtenues par la mise en œuvre de ces procédés doivent posséder de bonnes propriétés mécaniques, telles que la résistance mécanique, et la résistance thermique.

Selon les domaines d'application, il est parfois nécessaire d'utiliser des pièces composites à bas coût. Bien que moins chères, ces pièces doivent tout de même satisfaire à un cahier des charges strict et posséder des propriétés mécaniques satisfaisantes pour les applications en question.

A cette fin, la préforme nécessaire à la fabrication des pièces composites peut par exemple être renforcée localement. Ce renforcement peut être réalisé en créant localement un raidisseur par déformation de la préforme. Cependant, la géométrie de la préforme devient alors complexe, ce qui constitue une source de difficulté technique et un surcoût pour sa fabrication. De plus, une grande déformabilité du matériau fibreux de la préforme est nécessaire ce qui limite le choix du type de matériau fibreux. Cette complexité géométrique est également un obstacle quant à la qualité d'imprégnation en procédé infusion, RTM, VARTM, C-RTM ou LCM ou WCM ou DFCM, notamment en ce qui concerne les parois de la préforme qui ne sont plus perpendiculaires à l'axe de compression, pendant la phase de compression lors de la fermeture du moule.

Par ailleurs, la solution du raidisseur par déformation de la préforme, entre autres solutions, ne permet généralement pas de garantir des propriétés mécaniques optimales de la pièce composite dans toute sa plage de température d'utilisation, en particulier lorsque la température d'utilisation de la pièce composite est supérieure à la température de transition vitreuse (Tg) de la résine d'imprégnation utilisée ultérieurement pour imprégner la préforme et obtenir la pièce composite.

Enfin, la solution du raidisseur par déformation de la préforme, entre autres solutions, ne permet généralement pas le passage en cataphorèse (il s'agit d'une technique de dépôt par électrophorèse de peinture industrielle) de la pièce composite obtenue pour les résines thermoplastiques amorphes possédant une température de transition vitreuse (Tg) inférieure aux températures du cycle de la cataphorèse, ou pour les résine semi-cristallines possédant une température de fusion (Tf) inférieure aux températures du cycle de la cataphorèse, ce qui peut conduire à une décompaction du composite. Concernant les thermodurcissables, si leur Tg est inférieure aux températures du cycle de la cataphorèse, une déformation de la pièce composite finale peut être observée après le cycle de cataphorèse.

### [Problème technique]

L'invention a donc pour but de remédier aux inconvénients de l'art antérieur en proposant un procédé de fabrication de pièce en matériau composite à partir d'une préforme, ledit procédé proposant une alternative aux solutions existantes pour le renforcement local de la préforme et de la pièce composite obtenue à partir de cette préforme.

Le procédé permet également de garantir de bonnes propriétés mécaniques de la pièce composite obtenue par ledit procédé dans toute la plage de température d'utilisation de la pièce composite, et en particulier pour des température d'utilisation supérieures à la température de transition vitreuse (Tg) de la résine d'imprégnation de la préforme.

Le procédé permet en outre le passage en cataphorèse de la pièce composite quelle que soit les températures de cycle utilisées en cataphorèse, et ce pour tout type de résines d'imprégnation de la préforme, en particulier pour des résines d'imprégnation possédant une température de transition vitreuse (Tg) ou dans le cas d'une résine semi-cristalline, une température de fusion (Tf) inférieure aux températures de mise en œuvre de la cataphorèse et n'étant donc pas compatibles avec la cataphorèse, ou dont le passage en cataphorèse d'une pièce composite imprégnée de cette résine conduit généralement à des propriétés mécaniques amoindries ou à une déformation de ladite pièce.

La température de transition vitreuse Tg sera désignée par la suite pour simplifier Tg.

La température de fusion Tf sera désignée par la suite pour simplifier Tf.

### [Brève description de l'invention]

A cet effet, l'invention a pour objet un procédé de fabrication d'une pièce en matériau composite caractérisé en ce que ladite pièce est obtenue à partir d'une préforme comportant des renforts locaux et une première résine d'imprégnation de faible viscosité, inférieure à 100Pa.s, de ladite préforme et en ce que ledit procédé comprend les étapes suivantes :
- i) Réalisation de ladite préforme comprenant un premier matériau fibreux et lesdits renforts locaux se présentant sous la forme de renforts formés d'un second matériau fibreux ayant des fibres de tenue mécanique supérieure à celle des fibres du premier matériaux fibreux, de sorte qu'elles présentent un module ou une contrainte à la rupture supérieure d'au moins 30% à celui des fibres dudit premier matériaux fibreux, ledit second matériau fibreux étant pré-imprégné d'une deuxième résine polymère thermoplastique, acrylique ou polyamide, ayant une température de transition vitreuse (Tg) supérieure à 80°C, la quantité de deuxième résine polymère étant comprise entre 25% et 60% en volume par rapport au volume total dudit second matériau fibreux,
- ii) Imprégnation de ladite préforme par la première résine d'imprégnation,
- iii) Refroidissement de la dite préforme imprégnée pour obtenir la pièce.

L'utilisation d'une deuxième résine polymère thermoplastique dont la température de transition vitreuse (Tg) est supérieure à 80°C permet d'accroitre les performances mécaniques et/ou thermiques des rubans de renfort et par voie de conséquence de la pièce réalisée.

Selon d'autres caractéristiques optionnelles du procédé :
- la pièce est réalisée par moulage par injection de la résine dans un moule fermé ou par dépôt de la résine sur la préforme soit hors du moule, soit dans le moule ouvert contenant la préforme ;
- les renforts locaux se présentent soit sous forme de feutres ou de mats, soit sous forme de tissus, de non tissés (NCF « Non Crimp Fabrics »), de fibres unidirectionnelles ou de tresses, et de préférence, ils sont constitués de fibres continues et se présentent sous forme de nappes ou de rubans de tissus, de non tissés, de fibres unidirectionnelles (UD) ou de tresses ;
- l'étape i) de réalisation de ladite préforme comprend le dépôt desdits renforts locaux en surface de ladite préforme et/ou l'insertion desdits renforts locaux dans la préforme;
   - en empilant des couches de tissus de fibres ou des couches de fibres non tissée (NCF « Non Crimp Fabrics ») ou des couches de mat de fibres, lesdites fibres étant soit sèches soit faiblement pré-imprégnées par une troisième résine, éventuellement différente de la première et de la deuxième résine, puis en déposant en surface les renforts formés du second matériau fibreux pour réaliser lesdits renforts locaux, ou
   - en fabriquant la préforme à partir de rubans unidirectionnels faiblement pré-imprégnés par une troisième résine éventuellement différente de la première et de la deuxième résine, déposés au moyen d'un robot et en ajoutant, dans la même opération et de préférence au cœur de la préforme, les renforts formés du second matériau fibreux totalement pré-imprégnés qui constituent lesdits renforts locaux ;
- l'étape i) de réalisation de la préforme est mise en œuvre par un procédé de placement automatique des fibres, de type AFP (Automatic fiber placement) dans lequel lesdits renforts sont déposés en surface de la préforme et/ou insérés dans la préforme lors de sa fabrication, par un robot asservi ;
- les fibres de renfort constituant les nappes, les tissus, les NCF, les mats de fibres ou les rubans unidirectionnels peuvent être co-mêlées à une ou plusieurs fibres de polymère ;
- le ou les polymères constituant les fibres co-mêlées aux fibres de renfort, sont ductiles dans la plage de température d'utilisation du composite ;
- le ou les polymères constituant les fibres co-mêlées aux fibres de renfort, comporte des charges conductrices électriquement et/ou thermiquement, qui sont de préférence des nanotubes de carbone ;
- la préforme est mise en forme par un procédé de thermo-estampage comportant une première étape de préchauffage de la préforme suivie d'une deuxième étape d'estampage à la forme finale, au moyen d'une presse à plateau chauffant ;
- le procédé est un procédé de moulage par infusion, utilisé de préférence pour la fabrication de pièces d'éolienne ;
- le procédé est un procédé de moulage par transfert de résine (RTM), de moulage par transfert de résine avec compression (C-RTM), ou de moulage par transfert de résine sous vide (VARTM) ;
- le procédé est un procédé de moulage par compression en voie humide (LCM ou WCM ou DFCM) ;
- dans le cas des procédés en moule fermé, la première résine d'imprégnation est injectée à une pression comprise entre 500 mbar et 200 bar, de préférence comprise entre 800mbar et 100 bar et de manière davantage préférée comprise entre 800mbar et 60 bar ;
- dans le cas d'un procédé en moule fermé, la première résine d'imprégnation présente, à la température d'injection une viscosité inférieure à 100 Pa.s, de préférence inférieure à 20 Pa.s et encore plus préférée, inférieure à 0.2 Pa.s ;
- dans le cas d'un procédé en moule ouvert, la première résine d'imprégnation présente, à la température de moulage, une viscosité inférieure à 100 Pa.s, de préférence inférieure à 20 Pa.s et encore plus préférée, inférieure à 0.2 Pa.s ;
- le premier matériau fibreux est en fibres de verre ;
- le premier matériau fibreux est pré-imprégné d'une troisième résine polymère ;
- le second matériau fibreux de renfort est en fibres de carbone ;
- le premier matériau fibreux est en fibres de verre et le second matériau fibreux du renfort est en fibres de carbone ;
- la deuxième résine polymère imprégnant le second matériau fibreux est choisie parmi les résines thermoplastiques amorphes ayant une Tg supérieure ou égale à 80°C de préférence supérieure ou égale à 180°C, et de manière davantage préférée supérieure ou égale à 230°C ; et de préférence inférieure à 250°C,
- la deuxième résine polymère imprégnant le second matériau fibreux est choisie parmi les résines thermoplastiques semi-cristallines présentant une Tg supérieure ou égale à 80°C de préférence supérieure ou égale à 120°C, et de manière davantage préférée supérieure ou égale à 150°C, et une Tf supérieure ou égale à 180°C, de préférence supérieure ou égale à 200°C, et de manière davantage préférée supérieure ou égale à 230°C et inférieure à 420°C, de préférence inférieure à 390°C et de manière davantage préférée inférieure à 300°C;
- la deuxième résine polymère imprégnant le second matériau fibreux est une résine thermoplastique choisie parmi : les polyamides (PA), en particulier les polyamides aromatiques ou semi aromatiques y compris les copolyamides, semi-cristallins ou amorphes, plus particulièrement les polyamides semi-cristallins haute température (PA HT), ou encore les résines thermoplastiques acryliques, tels que le Poly(méthacrylate de méthyle) (PMMA) ou les copolymères de méthacrylate de méthyle (MMA), ou leurs mélanges ;
- la deuxième résine polymère imprégnant le second matériau fibreux est une résine semi-cristalline sélectionnée parmi les polyamides (PA) en particulier les polyamides aromatiques ou semi aromatiques y compris les copolyamides, de préférence un polyamide semi-cristallin haute température (PA HT) préférentiellement choisi parmi un polyamide x.T ou un copolyamide x.T/x'.T, dans lesquels T est l'acide téréphtalique et x est une diamine aliphatique linéaire en Cg à C₁₈, de préférence en Cg à C₁₂, et x' est une diamine différente de x, de sorte que le rapport molaire [ x / (x + x') ] soit compris entre 15% et 45% bornes incluses, x' étant choisie parmi une diamine monoramifiée par un méthyle ou un éthyle et ayant une différence de longueur de chaîne d'au moins un atome de carbone avec la diamine x, ou parmi la xylylène diamine ou une diamine linéaire aliphatique en C₄ à C₁₈ dans le cas où x est en C₁₀ à C₁₈, ou x' en C₉ à C₁₈ dans le cas où x est en Cg ou C₁₀ ;

- le second matériau fibreux du renfort local comprend une quantité de deuxième résine polymère comprise entre 25% et 60% en volume, de préférence entre 35% et 60%, de manière plus préférée entre 35 et 55% et de manière davantage préférée entre 35 et 50% en volume par rapport au volume total dudit second matériau fibreux ;
- la première résine d'imprégnation possède une Tg inférieure à 230°C, de préférence inférieure ou égale à 150 °C et plus particulièrement inférieure ou égale à 120°C, et de manière encore plus préférée inférieure ou égale à 100°C ;
- la première résine d'imprégnation est semi-cristalline et possède une Tf inférieure à 230°C, de préférence inférieure ou égale à 200°C, et de manière encore plus préférée inférieure ou égale à 190°C ;
- la première résine d'imprégnation est choisie parmi : les résines thermodurcissables, de préférence polyester, vinyl-ester, acryliques ou époxy (époxy-amine), les résines thermodurcissables polyimides, en particulier la résine bismaléimide, les résines thermodurcissables polyuréthanes ; ou parmi les résines thermoplastiques, de préférence les résines polyamides (PA, PAHT), les résines acryliques ou leur mélange;
- la première résine d'imprégnation est choisie parmi les résines époxy et la deuxième résine polymère d'imprégnation du second matériau fibreux du renfort local est une résine polyamide (PA, PAHT);
- la première résine d'imprégnation de la préforme est compatible avec ladite deuxième d'imprégnation du second matériau fibreux et/ou avec la troisième résine d'imprégnation du premier matériau fibreux.

L'invention se rapporte en outre à une pièce en matériau composite, principalement caractérisée en ce qu'elle comprend une préforme imprégnée d'une première résine d'imprégnation, ladite préforme comprenant un premier matériau fibreux et des renforts locaux formés d'un second matériau fibreux ayant des fibres de tenue supérieure à celle des fibres du premier matériau fibreux, et présentant un module supérieur d'au moins 30%, et de préférence supérieur d'au moins 100% à celui des fibres dudit premier matériau fibreux, ledit second matériau fibreux étant pré-imprégné par une deuxième résine polymère thermoplastique, acrylique ou polyamide, ayant une température de transition vitreuse (Tg) supérieure à 80°C, la quantité de deuxième résine polymère étant comprise entre 25% et 60% en volume par rapport au volume total dudit second matériau fibreux, ladite préforme étant imprégnée de ladite première résine d'imprégnation.

De manière avantageuse, la pièce composite est obtenue par un procédé tel que défini précédemment.

Le premier matériau fibreux est pré-imprégné d'une troisième résine polymère.

De préférence, la pièce comprend :
- au moins une préforme comprenant un premier matériau fibreux en fibres de verre et éventuellement pré-imprégné par une résine polymère,
- au moins un renfort comprenant un second matériau fibreux en fibres de carbone, ledit second matériau fibreux étant pré-imprégné d'une résine polymère thermoplastique ayant une température de transition vitreuse (Tg) supérieure à 80°C, de préférence, une résine polyamide (PA, PAHT) ,
- une résine d'imprégnation de ladite préforme, de faible viscosité, inférieure à 100Pa.s, choisie parmi les résines époxy, les résines polyamide (PA, PAHT), ou les résines acryliques.

Alternativement, la résine polymère du renfort comprenant le second matériau fibreux est choisie parmi les résines thermoplastiques acryliques, tels que le Poly(méthacrylate de méthyle) (PMMA) ou les copolymères de méthacrylate de méthyle (MMA).

Une telle pièce est utilisée notamment pour la construction mécanique, aéronautique, navale ou le nautisme, l'automobile, notamment pour les châssis d'automobiles, l'énergie éolienne, hydrolienne ou hydroélectrique (éolienne, hydrolienne, turbines) ou dans le bâtiment, ou encore pour la santé et le médical, l'armée et l'armement, les sports et loisirs, l'électronique, ou les centrales solaires (miroirs) ou photovoltaïques (panneaux).

### [Description détaillée de l'invention]

Un premier objet de l'invention concerne un procédé de fabrication de pièces en matériau composite, en particulier des pièces en trois dimensions structurées ou semi-structurées. Le procédé de fabrication comprend une étape de réalisation d'une préforme comprenant un premier matériau composite, également désigné par la suite en tant que « pré-imprégné », ledit pré-imprégné comprenant un premier matériau fibreux a1) et une matrice polymère a2) imprégnant le matériau fibreux. La préforme comprend également des renforts locaux b) se présentant sous forme de renforts formés d'un second matériau fibreux b1) imprégné d'une matrice polymère b2). Ces renforts sont déposés sur la préforme ou insérés dans ladite préforme, préférentiellement aux endroits correspondants de la pièce composite finale susceptibles de subir les efforts et déformations mécaniques les plus importants.

La pièce composite finale est obtenue par mise en place de la préforme comprenant les renforts locaux dans un moule, puis imprégnation de ladite préforme par injection d'une résine de faible viscosité dans le moule fermé éventuellement suivie d'une phase de compression (cas du C-RTM).

Dans le cas du moulage par compression en voie humide (LCM, WCM, DFCM), la pièce composite finale est obtenue par mise en place de la préforme comprenant les renforts locaux dans un moule, l'imprégnation de la préforme ayant été faite par dépôt d'une résine de faible viscosité sur la préforme fibreuse soit hors du moule soit dans le moule ouvert et est suivie d'une phase de compression lors de la fermeture du moule.

On entend par « résine de faible viscosité », une résine dont la viscosité, mesurée à l'aide d'un rhéomètre plan-plan, à la température d'introduction de la résine dans le moule, et à bas gradient (taux de cisaillement inférieur à 1s⁻¹) est inférieure à 100 Pa.s. De préférence, la viscosité est inférieure à 20 Pa.s et, de manière encore plus préférée, elle est inférieure à 0,2 Pa.s.

Le terme « injection » doit être ici compris au sens large et se réfère à des procédés de fabrication choisis parmi le moulage par transfert de résine (RTM), le moulage par transfert de résine par compression (C-RTM), le moulage par transfert de résine sous vide (VARTM), le moulage par infusion par exemple.

Le dépôt de résine sur la préforme hors moule ou dans le moule ouvert se réfère à des procédés de dépôt par spray, ou par flamme-spray dans le cas d'une poudre de résine thermoplastique ou par fusion d'une résine thermoplastique de faible viscosité par exemple au moyen d'un fondoir ou d'une extrudeuse et dépôts par gravité sans système de connexion étanche au moule.

Les renforts locaux se présentent soit sous forme de mat ou de feutres, soit sous forme de tissus, de non tissés, de fibres unidirectionnelles (UD) ou de tresses. Ils sont de préférence constitués de fibres continues et se présentent sous forme de nappes ou de rubans de tissus, non tissés (encore noté NCF pour « Non Crimp Fabrics »), fibres unidirectionnelles ou de tresses.

Par « ruban », on entend un matériau en feuille, qui présente une longueur bien supérieure à sa largeur. De préférence, les rubans utilisés dans le cadre de l'invention sont de largeur sensiblement constante sur toute leur longueur. Les fibres constitutives du ruban de renfort s'étendent selon une direction parallèle à la longueur dudit ruban de renfort, qui est alors dit renfort « unidirectionnel ».

Les termes « polymère thermoplastique » ou « résine thermoplastique », tels qu'utilisés, se rapportent à un polymère ou à une résine qui n'est pas réticulé et qui peut être à l'état fondu et plus ou moins visqueux (en fonction de la température) lorsqu'il (elle) est chauffé(e) à une température supérieure à sa température de transition vitreuse Tg (polymère amorphe) ou sa température de fusion Tf (polymère semi-cristallin).

Les termes « polymère thermodurcissable » ou « résine thermodurcissable », ou encore « polymère ou résine réticulable », tels qu'utilisés, se rapportent à un prépolymère ou à une résine ou à un système réactif multi-composant qui se transforme de manière irréversible en un réseau polymère infusible et insoluble (réticulé) par durcissement (réticulation).

Le terme « polymère » tel qu'utilisé, désigne un matériau comprenant une succession de un ou plusieurs motifs répétitifs identiques ou différents.

On parlera de « résine » ou de « résine polymère » pour désigner un polymère ou un mélange de polymères et des additifs, tels que des catalyseurs, amorceurs de polymérisation, durcisseur etc..., pour l'imprégnation d'un substrat fibreux tel qu'un matériau fibreux sous forme de mèches, de nappes, ou encore de tissus par exemple, ou bien d'une préforme constituée de plusieurs couches de matériaux fibreux préalablement imprégnés dits « pré-imprégnés ». Une résine polymère constitue la matrice polymère d'un matériau composite tel qu'un pré-imprégné ou une préforme.

Les températures de transition vitreuse Tg et de fusion Tf des différentes matrices polymères utilisées sont mesurées par DSC, respectivement selon les normes ISO-11357-2 et 11357-3, en deuxième chauffe avec une montée en température de 20°C/min. Les températures sont mesurées avec une précision de ±1°C.

### Le pré-imprégné de la préforme a)

**Concernant le premier matériau fibreux a1) du pré-imprégné,** il comprend des fibres, notamment des fibres d'origine minérale, organique ou végétale. Parmi les fibres d'origine minérale, on peut citer les fibres de carbone, les fibres de verre, les fibres de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides aromatiques, des fibres d'aramide ou des fibres en polyoléfines par exemple. De préférence, elles sont à base de polymère thermoplastique. Lorsqu'elles sont à base d'un polymère thermoplastique amorphe elles présentent t une température de transition vitreuse Tg qui sera soit supérieure à la (aux) Tg du polymère (ou mélange de polymères) de la résine a2) de faible viscosité servant à imprégner ledit premier matériau fibreux a1), lorsque ce polymère (ou mélange de polymères) est amorphe ou thermodurcissable, soit supérieure à la (aux) température(s) de fusion Tf du polymère (ou mélange de polymères) de la résine a2) de faible viscosité servant à imprégner ledit premier matériau fibreux a1), lorsque ce polymère (ou mélange de polymères) est semi-cristallin. Lorsque les fibres a1) sont en polymère thermoplastique semi-cristallin, leur température de fusion Tf sera supérieure à la (aux) température(s) de transition vitreuse ou de fusion du polymère (ou mélange de polymères) de la résine a2) selon qu'il(s) est (sont) amorphe(s), thermodurcissable(s) ou semi-cristallin(s). Ainsi, il n'y a aucun risque de fusion pour les fibres organiques de constitution du matériau fibreux. Parmi les fibres d'origine végétale, on peut citer les fibres naturelles à base de lin, de chanvre, de soie notamment d'araignée, de sisal, et d'autres fibres cellulosiques, en particulier de viscose.

Les fibres du premier matériau fibreux a1) peuvent être utilisées seules ou en mélanges. Ainsi, des fibres organiques peuvent être mélangées aux fibres minérales, dans la matrice polymérique a2) du pré-imprégné.

Les fibres sont au choix monobrin, multibrin ou un mélange des deux, et peuvent avoir plusieurs grammages. Elles peuvent en outre présenter plusieurs géométries. Ainsi, elles peuvent se présenter sous forme de fibres coupées, qui composent alors les feutres ou les non tissés pouvant se présenter sous la forme de bandes, nappes, tresses, mèches ou morceaux, ou sous forme de fibres continues, qui composent les tissus multidirectionnels (2D, 3D), les fibres ou mèches de fibres unidirectionnelles (UD) ou non tissées. Les fibres du matériau fibreux peuvent en outre se présenter sous forme d'un mélange de ces fibres de renfort de différentes géométries. De préférence, les fibres sont continues.

De préférence le premier matériau fibreux a1) est constitué de fibres continues de carbone, de verre ou de carbure de silicium ou leur mélange, et de manière davantage préféré de fibres de verre. Il est avantageusement utilisé sous forme d'une mèche ou de plusieurs mèches assemblées entre elles.

Selon un mode préféré de l'invention les fibres sont des fibres de verre.

**Concernant la matrice polymère a2) du pré-imprégné,** elle est constituée avantageusement d'une résine thermoplastique.

Plus particulièrement, les résines thermoplastiques entrant dans la constitution de la matrice polymère a2) du pré-imprégné de la préforme peuvent être choisies parmi :
- les résines de la famille des polyamides (PA), tels que le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10), le polyamide 6.12 (PA-6.12), les polyamides contenant des motifs aromatiques éventuellement modifiées par des unités urée, en particulier les polyphtalamides et l'aramide, et les copolymères blocs, notamment polyamide/polyéther,
- les polyurées, en particulier aromatiques,
- les polymères et copolymères de la famille des acryliques comme les polyacrylates, et plus particulièrement le polyméthacrylate de méthyle (PMMA) ou ses dérivés,
- les polymères et copolymères de la famille des polyaryléther cétones (PAEK) comme le polyéther-éther-cétone (PEEK), ou les polyaryléther-cétones-cétones (PAEKK) comme le polyéther-cétone-cétone (PEKK) ou leurs dérivés,
- les polyéther-imides (PEI) aromatiques,
- les polyarylsulfures, en particulier le polyphénylène sulfures (PPS),
- les polyarylsulfones, en particulier les polyphénylène sulfones (PPSU),
- les polyoléfines en particulier le polyéthylène (PE),
- l'acide polylactique (PLA),
- l'alcool polyvinylique (PVA),
- les résines fluorées, en particulier le polyfluorure de vinylidène (PVDF), ou le polytétrafluoroéthylène (PTFE) ou le polychlorotrifluoroéthylène (PCTFE),
- un mélange des résines citées précédemment.

Pour les résines fluorées, on préfère utiliser un homopolymère du fluorure de vinylidène (VDF de formule CH2=CF2) ou copolymère du VDF comprenant en poids au moins 50% en masse de VDF et au moins un autre monomère copolymérisable avec le VDF. La teneur en VDF est de préférence supérieure à 80% en masse, et de manière plus préférée supérieure à 90% en masse, pour assurer une bonne résistance mécanique à la pièce composite finale, surtout lorsqu'elle est soumise à des contraintes thermiques. Le comonomère peut être un monomère fluoré choisi par exemple parmi le fluorure de vinyle.

De manière facultative, la résine thermoplastique comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la fluidification de la matrice polymère lorsqu'elle est chauffée.

Selon une autre variante, la résine thermoplastique peut en outre comprendre des additifs, tels que des polymères à cristaux liquides ou du poly(butylène téréphtalate) cyclisé, ou des mélanges de ces deux additifs comme la résine CBT100 commercialisée par la société CYCLICS CORPORATION. Ces additifs permettent notamment de fluidifier la matrice polymère à l'état fondu, pour une meilleure pénétration au cœur des fibres. Selon la nature du polymère ou mélange de polymères thermoplastiques constituant la matrice du pré-imprégné, notamment sa température de fusion, on choisira l'un ou l'autre de ces additifs.

Le pré-imprégné constitutif de la préforme est de préférence « sec », en ce qu'il comprend des porosités entre les fibres et une faible quantité de matrice polymère qui recouvre les fibres en surface pour les maintenir ensemble. Les porosités permettent de faciliter le transport ultérieur de la résine d'imprégnation c) au sein du pré-imprégné, lors de l'injection de ladite résine dans un moule pour former la pièce composite finale, afin d'améliorer les propriétés mécaniques de la pièce composite et notamment sa cohésion mécanique.

Ainsi, le pourcentage de matrice polymère a2) du pré-imprégné est avantageusement compris entre 0,2% et 15 % en volume, de préférence entre 0,2% et 10% en volume et plus préférentiellement de 0,2% et 5% en volume par rapport au volume total du pré-imprégné. Dans ce cas on peut également parler de voile polymère ou de liant, de faible grammage, déposé sur le matériau fibreux pour maintenir les fibres entre elles.

### Les renforts locaux b) de la préforme a)

Les renforts locaux se présentent soit sous forme de feutres ou de mats, soit sous forme de tissus, de non tissés, de fibres unidirectionnelles ou de tresses. Ils sont de préférence constitués de fibres continues et se présentent sous forme de nappes ou de rubans de tissus, de non tissés, de fibres unidirectionnelles (UD) ou de tresses.

De manière avantageuse, les fibres de renfort, constituant les nappes, les tissus, les couches de fibres non tissées NCF (« Non Crimp Fabrics »), les mats de fibres ou les rubans unidirectionnels sont co-mêlées à une ou plusieurs fibres de polymère. Le ou les polymères constituant les fibres co-mêlées aux fibres de renfort, sont ductiles dans la plage de température d'utilisation du composite. Selon un autre mode de fabrication, ce ou ces polymères peuvent comporter des charges conductrices électriquement et/ou thermiquement, qui sont de préférence des nanotubes de carbone.

Les renforts locaux b) de la préforme se présentent avantageusement sous la forme de rubans en matériau composite comprenant un second matériau fibreux b1) et une matrice polymère b2). Lors de la fabrication de la préforme, et préalablement à l'étape d'injection de la résine c) d'imprégnation de la préforme a) dans le moule, les rubans de renfort sont déposés sur la préforme ou insérés dans la préforme, avantageusement dans les zones de la préforme correspondant aux zones les plus sollicitées mécaniquement et/ou thermiquement de la pièce composite finale.

Lors du dépôt ou de l'insertion des rubans de renfort dans la préforme, lesdits rubans sont positionnés et orientés de manière à optimiser les propriétés mécaniques et/ou thermiques de la pièce composite finale. En particulier, les rubans sont positionnés et orientés en accord avec le chargement futur de la pièce composite.

Ce dépôt ou insertion sélective des rubans de renfort dans les zones utiles permet d'utiliser des quantités considérablement réduites de matériau fibreux b1) de renfort, en particulier de fibres de carbone, et de matrice b2) de renfort, pour renforcer la préforme et la pièce composite, tout en assurant des propriétés mécaniques et thermiques optimales. Par voie de conséquence, les coûts de production sont également fortement réduits.

**En ce qui concerne le second matériau fibreux b1) du renfort b),** il comprend des fibres pouvant être choisies parmi celles qui constituent le premier matériau fibreux a1) du pré-imprégné. Les fibres du second matériau fibreux b1) du ruban et les fibres du premier matériau fibreux du pré-imprégné peuvent être ou non de même nature, identiques ou non. De préférence, les fibres du second matériau fibreux b1) du ruban et les fibres du premier matériau fibreux a1) du pré-imprégné sont différentes, et celles du ruban ont une tenue mécanique supérieure à celle des fibres du premier matériau fibreux a1) de la préforme de sorte qu'elles présentent un module ou une contrainte à la rupture supérieur d'au moins 30% à celui des fibres du premier matériau fibreux a1)et de préférence supérieur d'au moins 100% à celui des fibres dudit premier matériau fibreux,

De manière davantage préférée, les fibres du matériau fibreux du ruban de renfort sont des fibres de carbone.

**En ce qui concerne la matrice polymère b2) du renfort b),** elle comprend une résine polymère thermoplastique, acrylique ou polyamide, de température de transition vitreuse Tg supérieure à 80°C. Le choix d'une résine polymère ayant une température de transition vitreuse (Tg) élevée, à savoir, supérieure à 80°C permet d'accroitre les performances mécaniques et/ou thermiques des rubans de renfort et par voie de conséquence, de la pièce réalisée.

De préférence, le second matériau fibreux b1) formant le ruban de renfort b) est imprégné à cœur de résine polymère b2). Dans ce cas, le second matériau fibreux b1) comprend une quantité de résine polymère b2) comprise entre 25% et 60% en volume, de préférence entre 35% et 60%, de manière plus préférée entre 35 et 55% et de manière davantage préférée entre 35 et 50% en volume par rapport au volume total du second matériau fibreux b1). On peut parler dans ce cas de ruban pré-imprégné « prêt à l'emploi », dans lequel la résine est répartie uniformément et de manière homogène autour des fibres, ce qui permet d'obtenir un minimum de porosité et un ruban de renfort résistant mécaniquement.

La résine constituant la matrice polymère b2) du ruban de renfort est préférablement choisie de manière à permettre une efficacité optimale dudit ruban de renfort dans toute la plage de température d'utilisation de la pièce composite finale, en particulier lorsque la température d'utilisation de ladite pièce composite finale est élevée.

De manière avantageuse, la résine b2) du ruban de renfort est choisie parmi les résines thermoplastiques amorphes possédant une Tg supérieure à 80°C, de préférence supérieure à 180°C, et de manière davantage préférée supérieure à 230°C. De préférence, la Tg est inférieure à 250°C.

De préférence, la résine b2) du ruban de renfort est choisie parmi les résines thermoplastiques semi-cristallines possédant une Tg supérieure à 80°C, de préférence supérieure ou égale à 120°C, et de manière davantage préférée supérieure ou égale à 150°C ; et une Tf supérieure ou égale à 180°C, de préférence supérieure ou égale à 200°C, et de manière davantage préférée supérieure ou égale à 230°C et inférieure à 420°C, de préférence inférieure à 390°C et de manière davantage préférée inférieure à 300°C.

De plus, la résine constituant la matrice polymère b2) du ruban de renfort b) est préférablement choisie de manière à permettre le passage en cataphorèse de la pièce composite quelle que soit les températures de cycle utilisées en cataphorèse, et ce pour tout type de résines d'imprégnation de la préforme, en particulier pour des résines d'imprégnation amorphes ou thermodurcissables possédant une température de transition vitreuse (Tg) inférieure à la température maximale de mise en œuvre de la cataphorèse, ou pour des résines d'imprégnation semi-cristalline dont la température de fusion (Tf) est inférieure à la température maximale de mise en œuvre de la cataphorèse et n'étant donc pas compatibles avec la cataphorèse, ou dont le passage en cataphorèse d'une pièce composite imprégnée de cette résine conduit à des propriétés mécaniques amoindries, ou à une déformation de ladite pièce.

La résine thermoplastique b2) du ruban de renfort est apte à passer en cataphorèse. Elle peut être choisie parmi :
- les résines thermoplastiques amorphes présentant une Tg supérieure ou égale à la température maximum du cycle de cataphorèse (qui est généralement de l'ordre de 220°C),
- les résines thermoplastiques semi-cristallines présentant une température de fusion (Tf) supérieure ou égale à la température maximum du cycle de la cataphorèse.

La résine b2) du ruban de renfort est avantageusement choisie parmi les résines suivantes : les polyamides (PA), en particulier les polyamides aromatiques ou semi aromatiques semi-cristallins ou amorphes, plus particulièrement les polyamides semi-cristallins haute température, notés par la suite PA HT ou parmi les résines thermoplastiques acryliques, tels que le Poly(méthacrylate de méthyle) (PMMA) ou les copolymères de méthacrylate de méthyle (MMA) ou leurs mélanges.

De manière davantage préférée, la résine b2) du ruban de renfort est un polyamide haute température PA HT. Le polyamide PA HT est de préférence choisi parmi un polyamide x.T ou un copolyamide x.T/x'.T, dans lequel T est l'acide téréphtalique et x est une diamine aliphatique linéaire en Cg à C₁₈, de préférence en Cg à C₁₂, et x' est une diamine différente de x, de sorte que le rapport molaire [ x / (x + x') ] soit compris entre 15% et 45% bornes incluses. La diamine x' est choisie parmi une diamine monoramifiée par un méthyle ou un éthyle et ayant une différence de longueur de chaîne d'au moins un atome de carbone avec la diamine x, ou parmi la xylylène diamine ou une diamine linéaire aliphatique en C₄ à C₁₈ dans le cas où x est en C₁₀ à C₁₈, ou x' en Cg à C₁₈ dans le cas où x est en Cg ou C₁₀.

Selon encore un autre choix, la résine polymère thermoplastique est un polyamide semi-aromatique (à base de structure aromatique) et/ou semi-cycloaliphatique (à base de structure cycloaliphatique), de préférence semi-aromatique (à base de structure aromatique), homopolyamide (homopolymère) ou copolyamide (copolymère de polyamide), plus particulièrement correspondant à l'une des formules suivantes :
- polyamides parmi : 8.T, 9.T, 10.T, 11.T, 12.T, 13.T, 14.T, 15.T, 16.T, 17.T, 18.T, 6.T/9.T, 9.T/10.T, 9.T/11.T, 9.T/12.T, 9/6.T, 10/6.T, 11/6.T, 12/6.T, 10/9.T, 10/10.T, 10/11.T, 10/12.T, 11/9.T, 11/10.T, 11/11.T, 11/12.T, 12/9.T, 12/10.T, 12/11.T, 12/12.T, 6.10/6.T, 6.12/6.T, 9.10/6.T, 9.12/6.T, 10.10/6.T, 10.12/6.T, 6.10/9.T, 6.12/9.T, 9.10/9.T, 9.12/9.T, 10.10/9.T 10.12/9.T, 6.10/10.T, 6.12/10.T, 9.10/10.T, 9.12/10.T, 10.10/10.T, 10.12/10.T, 6.10/12.T, 6.12/12.T, 9.10/12.T, 9.12/12.T, 10.10/12.T, 11/6.T/9.T, 11/6.T/10.T, 11/6.T/11.T, 11/6.T/12.T, 11/9.T/10.T, 11/9.T/11.T, 11/9.T/12.T, 11/10.T/11.T, 11/10.T/12.T, 11/11.T/12.T, 6.T/10.T, 6.T/11.T, 6.T/12.T, 10.T/11.T, 10.T/12.T, 11.T/12.T, 12/6.T/10.T, 12/6.T/11.T, 12/6.T/12.T, 12/9.T/10.T, 12/9.T/11.T, 12/9.T/12.T, 12/10.T/11.T, 12/10.T/12.T, 12/11.T/12.T, 66/6.T, 6/6.T,
- polyamides terpolymères précédents avec 12/ remplacé par 9/, 10/, 6.10/, 6.12/, 10.10/, 10.12/, 9.10/ et 9.12/,
- tous les polyamides cités ci-haut où le téréphtalique (T) est remplacé partiellement ou totalement par l'isophtalique (I), le naphtalène 2,6 dicarboxylique et/ou par le 1,3 ou le 1,4 CHDA (acide cyclohexane dicarboxylique), avec tout ou partie des diamines aliphatiques pouvant être remplacées par des diamines cycloaliphatiques,
- tous les polyamides cités ci-haut, avec remplacement de la diamine aliphatique en C₆ à C₁₂ par une diamine cycloaliphatique parmi BMACM, BACM et/ou IPDA et avec remplacement de tout ou partie du diacide aromatique T, par un diacide aliphatique linéaire ou ramifié en C₆ à C₁₈,
- des polyamides, y compris copolyamides statistiques ou séquencés, comprenant des motifs amides A et B différents et en option, des motifs amides C et D différents, la somme des taux molaires A+B+C+D ou A+B ou A+B+C ou A+B+D, selon que C et/ou D sont présents ou non, étant égale à 100%. Les motifs A, B, C et D sont sélectionnés comme suit :
   - A est un motif amide majoritaire présent à un taux molaire allant de 55 à 95%, de préférence de 55 à 80%, plus préférentiellement de 55 à 75%, choisi parmi les motifs x.T, où x est une diamine aliphatique linéaire en C₉ à C₁₈, de préférence en C₉, C₁₀, C₁₁, C₁₂ et où T est l'acide téréphtalique,
   - B est un motif amide différent de A, lequel motif B est présent à un taux molaire allant de 5 à 45%, de préférence de 20 à 45%, plus préférentiellement de 25 à 45%, en fonction de la Tf du polyamide à base de motif A et avec ledit motif amide B étant choisi parmi les motifs x'.T, où x' est choisi parmi :
      ∘ B1) un diamine aliphatique ramifiée portant une seule ramification (branchement signifiant la même chose) méthyle ou éthyle, de préférence méthyle, en particulier la 2-méthyl pentaméthylène diamine (MPMD) ou la 2-méthyl octaméthylène diamine (MOMD) et ayant une longueur de chaine principale différente d'au moins deux atomes de carbone par rapport à la longueur de chaine principale de la diamine x dudit motif associé, de préférence x' (selon B1)) étant le MPMD ou
      ∘ B2) la m-xylylène diamine (MXD) ou
      ∘ B3) une diamine aliphatique linéaire en C₄ à C₁₈ quand dans ledit motif A, ladite diamine x est une diamine aliphatique linéaire en C₁₁ à C₁₈ et x' est une diamine en C₉ à C₁₈ quand dans ledit motif A, ladite diamine x est une diamine en C₉ ou C₁₀, de préférence avec une différence d'au moins deux atomes de carbone entre la chaine de diamine x dudit motif A et la chaine de diamine x' dudit motif B,
      et de préférence, ledit motif B est choisi parmi les motifs x'.T, où x' est la MPMD selon option B1) ou la MXD selon option B2) ou une diamine aliphatique linéaire comme définie ci-haut selon option B3) ou plus préférentiellement x' est la MPMD selon B1) ou la MXD selon B2) et encore plus préférentiellement x' est la MXD selon B2)
   - C est un motif amide optionnel différent de A et de B et choisi parmi les motifs amides à base de (signifiant comprenant) une structure cycloaliphatique et/ou aromatique ou à base de x'.T tel que défini ci-dessus pour B mais avec x' différent de x' pour le motif B. Ainsi, si x' du motif C est défini selon B1), alors dans ce cas, le motif B peut avoir x' défini selon soit B2 soit B3. Si C est à base de x' selon B2, alors dans ce cas, le motif B peut avoir x' défini selon soit B1 soit B3. Enfin, Si C est à base de x' selon B3, alors dans ce cas, le motif B peut avoir x' défini selon soit B1 soit B2. Plus particulièrement, dans ce motif C, ladite structure aromatique peut être choisie parmi la structure isophtalique et/ou naphtalènique. Une structure téréphtalique est possible en particulier pour le composant diacide quand la diamine est cycloaliphatique. La structure cycloaliphatique peut être choisie parmi une structure à base de cycle cyclohexane ou une structure à base de cycle décahydronaphtalènique (structure naphtalènique hydrogénée)
   - D est un motif amide optionnel différent de A, de B et de C, quand C est présent et choisi parmi les motifs amides aliphatiques issus de :
      ∘ aminoacides ou lactames en C₆ à C₁₂, de préférence C₆, C₁₁ et C₁₂ ou leurs mélanges,
      ∘ la réaction d'un diacide aliphatique linéaire en C₆ à C₁₈, de préférence en C₆ à C₁₂ et d'une diamine aliphatique linéaire en C₆ à C₁₈, de préférence en C₆ à C₁₂ ou leurs mélanges, et de préférence avec les motifs A et B étant respectivement à base de diamines x et x' comme définies ci-dessus.

De manière facultative, il est possible de rajouter sur le ruban de renfort un liant, ou colle, afin de rendre compatible ou d'augmenter la compatibilité entre la deuxième résine b2) du ruban de renfort b) et la première résine d'imprégnation c) de la préforme a) utilisée pour obtenir la pièce composite finale. Le liant peut être ajouté pendant la fabrication du ruban de renfort b), ou après sa dépose ou son insertion dans la préforme, en utilisant un moyen de dépose approprié.

Le ruban de renfort peut être obtenu par des techniques couramment utilisées dans l'industrie des polymères. Une de ces méthodes consiste à assembler des mèches constituées de fils ou filaments des fibres souhaitées, par exemple des fils de carbone, afin de former des nappes. Ces nappes ont souvent une largeur de l'ordre de 500mm.

Les nappes sont ensuite imprégnées de résine constituant une matrice polymère b2), afin de former le pré-imprégné. Les nappes sont par la suite refendues pour obtenir des rubans de faible largeur, c'est-à-dire une largeur généralement de l'ordre de 5 à 100mm. Ces rubans peuvent également être fabriqués directement à la bonne largueur.

### La réalisation de la préforme a)

La préforme comprend plusieurs couches de pré-imprégné muni des rubans de renfort, dont l'agencement contribue à l'optimisation des propriétés mécaniques de la pièce composite finale. La préforme peut être obtenue par exemple par l'une des méthodes suivantes :
- une première méthode consiste à associer plusieurs couches de tissus de fibres ou des couches de fibres non tissées (NCF « Non Crimp Fabrics) ou des couches de mat de fibres (correspondant au premier matériau fibreux a1)), lesdites fibres étant soit sèches, soit faiblement pré-imprégnés par la résine a2). Ces couches sont de préférence de grande largeur, généralement de l'ordre de 1m, et sont déposées sur un support métallique dont la forme correspond sensiblement à celle de la pièce composite finale. Les couches sont pré-imprégnées avec la résine polymère a2), éventuellement différente de la résine b2) et de la résine c) d'imprégnation de la préforme, ou liant permettant de relier entre elles les différentes couches de tissus ou de fibres. La préforme est figée par chauffage des couches de tissus ou de fibres. Les rubans de renfort b1) selon l'invention sont ensuite déposés en surface de la préforme dans des zones prédéfinies nécessitant un renfort local.
- une deuxième méthode consiste à fabriquer la préforme à partir de rubans unidirectionnels (correspondant au premier matériau fibreux a1)), faiblement pré-imprégnés par la résine a2), éventuellement différente de la résine b2) et de la résine c) d'imprégnation de la préforme. Les rubans unidirectionnels pré-imprégnés sont déposés au moyen d'un robot selon le procédé AFP, de l'acronyme anglais « Automatic Fiber Placement ». Contrairement à la méthode précédente, les rubans de renfort locaux b) selon l'invention, totalement pré-imprégnés, sont ici ajoutés par le robot pendant la réalisation de la préforme, en même temps que les rubans unidirectionnels. Cela permet d'avoir une plus grande liberté quant au positionnement des rubans, qui peuvent notamment être insérés au cœur de la préforme, comme déposés en surface. De préférence, les renforts locaux sont déposés au cœur de la préforme.

### La résine polymère d'imprégnation c)

Par résine polymère, on entend ici une composition chimique faiblement visqueuse, c'est-à-dire présentant une viscosité inférieure à 100 Pa.s, comprenant des composants comportant des groupements réactifs. Une telle résine, lorsqu'elle est injectée dans un moule contenant la préforme, permet par imprégnation de la préforme et polymérisation ultérieure de la résine, d'obtenir une pièce en matériau composite pour des applications variées, par exemple le domaine ferroviaire, aéronautique, ou encore la construction et le bâtiment.

Les résines utilisées sont les résines réactives, permettant une polymérisation in-situ. Ces résines sont faiblement visqueuses, avec une viscosité préférentiellement inférieure ou égale à 100 Pa.s, de préférence inférieure à 20 Pa.s et de manière encore plus préférée inférieure à 0,2 Pa.s, à la température d'introduction de la résine dans le moule.

La polymérisation de la résine peut être une polymérisation par voie radicalaire, ou une polyaddition ou polycondensation.

La résine d'imprégnation peut être choisie parmi : les résines thermodurcissables ou les résines thermoplastiques.

Lorsque la résine est choisie parmi les résines thermodurcissables, elle est choisie parmi les résines thermodurcissables polyester, les résines thermodurcissables vinyl-ester, les résines thermodurcissables acryliques, les résines thermodurcissables époxy (système époxy-amine), les résines thermodurcissables polyimide (en particulier la résine Bismaléimide), les résines thermodurcissables polyuréthanes, ou leurs mélanges.

Lorsqu'elle est choisie parmi les résines thermoplastiques, elle est choisie parmi les résines thermoplastiques polyamides (PA et PAHT), ou les résines thermoplastiques acryliques, ou leurs mélanges.

Les résines polyamides (PA et PAHT) utilisées peuvent être obtenues par ouverture de cycles de lactames, en particulier les lactames ayant de 3 à 12 atomes de carbone sur le cycle principal et pouvant être substitués. A titre d'exemple, on peut citer le β,β-diméthyiproprioiactame, le α,α-diméthylpropriolactame, l'amylolactame, le caprolactame, le capryllactame et le lauryllactame. Les résines polyamides peuvent en outre contenir des additifs tels que des colorants, des pigments, des azurants, des antioxydants, des stabilisateurs UV.

Les résines polyamides utilisées peuvent en outre être obtenues par réaction d'un pré-polymère polyamide P(X)n comprenant n fonctions réactives X identiques de préférence carboxy ou aminé avec un allongeur de chaine non polymérique Y-A-Y dont les fonctions Y identiques réagissent avec les fonctions X du prépolymère.

Le choix particulier des allongeurs de chaine, par rapport aux fonctions X portées par ledit pré-polymère, est définit de la manière suivante :
- lorsque X est NH₂ ou OH, de préférence NH₂ :
   - soit l'allongeur de chaine Y-A-Y correspond à
      ∘ Y choisi parmi les groupements : maléimide, isocyanate éventuellement isocyanate bloqué, oxazinone et oxazolinone, de préférence oxazinone et oxazolinone, et
      ∘ A étant un espaceur carboné ou radical carboné, portant les fonctions ou groupements réactifs Y, A choisi parmi :
         ▪ une liaison covalente entre deux fonctions (groupements) Y dans le cas où Y = oxazinone, oxazolinone, ou
         ▪ une chaine hydrocarbonée aliphatique ou une chaine hydrocarbonée aromatique et/ou cycloaliphatique, ces deux dernières comprenant au moins un cycle de 5 ou 6 atomes de carbone, éventuellement substitué, ladite chaine hydrocarbonée aliphatique ayant de préférence un poids moléculaire de 14 à 200
   - soit l'allongeur de chaine Y-A-Y a comme groupement Y un caprolactame et A pouvant être un carbonyle, tel que le carbonyl biscaprolactame ou A peut être un téréphtaloyle ou un isophtaloyle,
   - soit ledit allongeur de chaine correspond à Y étant un groupement d'anhydride cyclique, ce qui signifie que ledit allongeur porte ou comprend deux groupements Y d'anhydride cyclique et cet allongeur est choisi parmi un dianhydride carboxylique aromatique et/ou cycloaliphatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride3,3',4,4'-diphényl éther tétracarboxylique ou leurs mélanges,
- et lorsque X est COOH :
   - l'allongeur de chaine Y-A-Y correspond à :
      ∘ Y choisi parmi les groupements : oxazoline, oxazine, imidazoline et aziridine comme le 1,1'-isophtaloyl-bis(2-methyl aziridine) ou l'aziridine équivalente avec téréphtaloyle, et à
      ∘ A étant un espaceur (radical) carboné tel que défini ci-dessus, avec A dans le cas des oxazolines, oxazines et imidazolines, pouvant être une simple liaison covalente entre les deux groupements.

Plus particulièrement, quand Y est choisi parmi oxazinone, oxazolinone, oxazine, oxazoline ou imidazoline, dans ce cas, dans l'allongeur de chaine représenté par Y-A-Y, A peut représenter un alkylène, tel que -(CH₂)ₘ- avec m allant de 1 à 14 et de préférence de 2 à 10 ou A peut aussi représenter un cycloalkylène et/ou un arylène substitué (alkyle) ou non substitué, comme les arylènes benzéniques, tels que les phénylènes o-, m-, -p ou les arylènes naphtaléniques, et de préférence A est un arylène et/ou un cycloalkylène.

Dans le cas du carbonyl- ou téréphtaloyl- ou isophtaloyl- biscaprolactame comme allongeur de chaine Y-A-Y, les conditions préférées évitent l'élimination de sous-produit, comme le caprolactame lors de la polymérisation et mise en œuvre à l'état fondu.

Dans le cas éventuel cité ci-dessus où Y représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

Pour X = OH ou NH₂, le groupement Y est choisi de préférence parmi : isocyanate (non bloqué), oxazinone et oxazolinone, plus préférentiellement oxazinone et oxazolinone, avec comme espaceur (radical) A étant comme défini ci-dessus.

Comme exemples d'allongeurs de chaîne avec des fonctions réactives Y oxazoline ou oxazine, convenables à la mise en œuvre du procédé selon l'invention, on pourra se référer à ceux décrits sous références A, B, C et D à la page 7 de la demande EP 0 581 642 de la Demanderesse ainsi qu'à leurs procédés de préparation et leur mode de réaction qui y sont exposés. A est la bisoxazoline, B la bisoxazine, C la 1 ,3 phénylène bisoxazoline et D la 1 ,4-phénylène bisoxazoline.

Comme exemples d'allongeurs de chaîne à fonction réactive Y imidazoline convenables à la mise en œuvre du procédé selon l'invention, on pourra se référer à ceux décrits (A à F) à la page 7 à 8 et tableau 1 de la page 10, dans la demande EP 0 739 924 de la Demanderesse ainsi qu'à leurs procédés de préparation et leur mode de réaction qui y sont exposés.

Comme exemples d'allongeurs de chaîne à fonction réactive Y = oxazinone ou oxazolinone qui conviennent à la mise en œuvre du procédé selon l'invention, on peut se référer à ceux décrits sous références A à D à la page 7 à 8 de la demande EP 0 581 641 de la Demanderesse ainsi qu'à leurs procédés de préparation et modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d' oxazolinone, avec comme espaceur A pouvant être une simple liaison covalente avec pour allongeurs correspondants respectifs étant : bis (benzoxazinone), bisoxazinone et bisoxazolinone.

A peut être également un alkylène en C₁ à C₁₄, de préférence en C₂ à C₁₀ mais de préférence A est un arylène et, plus particulièrement, il peut être un phénylène (1 ,2 ou 1 ,3 ou 1 ,4 substitué par Y) ou un radical naphtalène (disubstitué par Y) ou un phtaloyle (iso- ou téréphtaloyle) ou A peut être un cycloalkylène.

Pour les fonctions Y comme oxazine (cycle à 6), oxazoline (cycle à 5) et imidazoline(cycle à 5), le radical A peut être comme décrit ci-haut avec A pouvant être une simple liaison covalente et avec les allongeurs correspondants respectifs étant : bisoxazine, bisoxazoline et bisimidazoline. A peut être également un alkylène en C₁ à C₁₄, de préférence en C₂ à C₁₀. Le radical A est de préférence un arylène et, plus particulièrement, il peut être un phénylène (1 ,2 ou 1 ,3 ou 1 ,4 substitué par Y) ou un radical naphtalène (disubstitué par Y) ou un phtaloyle (iso-ou téréphtaloyle) ou A peut être un cycloalkylène.

Dans le cas où Y = aziridine (hétérocycle azoté à 3 atomes équivalent à l'oxyde d'éthylène en remplaçant l'éther -O- par -NH-), le radical A peut être un phtaloyle (1 , 1 'iso- ou téré- phtaloyle) avec comme exemple d'allongeur la 1 , 1 ' isophtaloyl-bis(2-méthyl aziridine).

Les résines polyamides utilisées peuvent aussi être obtenues par réaction de deux pré-polymères à fonctions réactives complémentaires.

Selon encore un autre choix, la résine polymère thermoplastique est un polyamide semi-aromatique (à base de structure aromatique) et/ou semi-cycloaliphatique (à base de structure cycloaliphatique), de préférence semi-aromatique (à base de structure aromatique), homopolyamide (homopolymère) ou copolyamide (copolymère de polyamide), plus particulièrement correspondant à l'une des formules suivantes :
- polyamides parmi: 8.T, 9.T, 10.T, 11.T, 12.T, 13.T, 14.T, 15.T, 16.T, 17.T, 18.T, 6.T/9.T, 9.T/10.T, 9.T/11.T, 9.T/12.T, 9/6.T, 10/6.T, 11/6.T, 12/6.T, 10/9.T, 10/10.T, 10/11.T, 10/12.T, 11/9.T, 11/10.T, 11/11.T, 11/12.T, 12/9.T, 12/10.T, 12/11.T, 12/12.T, 6.10/6.T, 6.12/6.T, 9.10/6.T, 9.12/6.T, 10.10/6.T, 10.12/6.T, 6.10/9.T, 6.12/9.T, 9.10/9.T, 9.12/9.T, 10.10/9.T 10.12/9.T, 6.10/10.T, 6.12/10.T, 9.10/10.T, 9.12/10.T, 10.10/10.T, 10.12/10.T, 6.10/12.T, 6.12/12.T, 9.10/12.T, 9.12/12.T, 10.10/12.T, 11/6.T/9.T, 11/6.T/10.T, 11/6.T/11.T, 11/6.T/12.T, 11/9.T/10.T, 11/9.T/11.T, 11/9.T/12.T, 11/10.T/11.T, 11/10.T/12.T, 11/11.T/12.T, 6.T/10.T, 6.T/11.T, 6.T/12.T, 10.T/11.T, 10.T/12.T, 11.T/12.T, 12/6.T/10.T, 12/6.T/11.T, 12/6.T/12.T, 12/9.T/10.T, 12/9.T/11.T, 12/9.T/12.T, 12/10.T/11.T, 12/10.T/12.T, 12/11.T/12.T, 66/6.T, 6/6.T,
- polyamides terpolymères précédents avec 12/ remplacé par 9/, 10/, 6.10/, 6.12/, 10.10/, 10.12/, 9.10/ et 9.12/,
- tous les polyamides cités ci-haut où le téréphtalique (T) est remplacé partiellement ou totalement par l'isophtalique (I), le naphtalène 2,6 dicarboxylique et/ou par le 1,3 ou le 1,4 CHDA (acide cyclohexane dicarboxylique), avec tout ou partie des diamines aliphatiques pouvant être remplacées par des diamines cycloaliphatiques,
- tous les polyamides cités ci-haut, avec remplacement de la diamine aliphatique en C₆ à C₁₂ par une diamine cycloaliphatique parmi BMACM, BACM et/ou IPDA et avec remplacement de tout ou partie du diacide aromatique T, par un diacide aliphatique linéaire ou ramifié en C₆ à C₁₈,
- des polyamides, y compris copolyamides statistiques ou séquencés, comprenant des motifs amides A et B différents et en option, des motifs amides C et D différents, la somme des taux molaires A+B+C+D ou A+B ou A+B+C ou A+B+D, selon que C et/ou D sont présents ou non, étant égale à 100%. Les motifs A, B, C et D sont sélectionnés comme suit :
   - A est un motif amide majoritaire présent à un taux molaire allant de 55 à 95%, de préférence de 55 à 80%, plus préférentiellement de 55 à 75%, choisi parmi les motifs x.T, où x est une diamine aliphatique linéaire en C₉ à C₁₈, de préférence en C₉, C₁₀, C₁₁, C₁₂ et où T est l'acide téréphtalique,
   - B est un motif amide différent de A, lequel motif B est présent à un taux molaire allant de 5 à 45%, de préférence de 20 à 45%, plus préférentiellement de 25 à 45%, en fonction de la Tf du polyamide à base de motif A et avec ledit motif amide B étant choisi parmi les motifs x'.T, où x' est choisi parmi :
      ∘ B1) un diamine aliphatique ramifiée portant une seule ramification (branchement signifiant la même chose) méthyle ou éthyle, de préférence méthyle, en particulier la 2-méthyl pentaméthylène diamine (MPMD) ou la 2-méthyl octaméthylène diamine (MOMD) et ayant une longueur de chaine principale différente d'au moins deux atomes de carbone par rapport à la longueur de chaine principale de la diamine x dudit motif associé, de préférence x' (selon B1)) étant le MPMD ou
      ∘ B2) la m-xylylène diamine (MXD) ou
      ∘ B3) une diamine aliphatique linéaire en C₄ à C₁₈ quand dans ledit motif A, ladite diamine x est une diamine aliphatique linéaire en C₁₁ à C₁₈ et x' est une diamine en C₉ à C₁₈ quand dans ledit motif A, ladite diamine x est une diamine en C₉ ou C₁₀, de préférence avec une différence d'au moins deux atomes de carbone entre la chaine de diamine x dudit motif A et la chaine de diamine x' dudit motif B,
      et de préférence, ledit motif B est choisi parmi les motifs x'.T, où x' est la MPMD selon option B1) ou la MXD selon option B2) ou une diamine aliphatique linéaire comme définie ci-haut selon option B3) ou plus préférentiellement x' est la MPMD selon B1) ou la MXD selon B2) et encore plus préférentiellement x' est la MXD selon B2)
   - C est un motif amide optionnel différent de A et de B et choisi parmi les motifs amides à base de (signifiant comprenant) une structure cycloaliphatique et/ou aromatique ou à base de x'.T tel que défini ci-dessus pour B mais avec x' différent de x' pour le motif B. Ainsi, si x' du motif C est défini selon B1), alors dans ce cas, le motif B peut avoir x' défini selon soit B2 soit B3. Si C est à base de x' selon B2, alors dans ce cas, le motif B peut avoir x' défini selon soit B1 soit B3. Enfin, Si C est à base de x' selon B3, alors dans ce cas, le motif B peut avoir x' défini selon soit B1 soit B2. Plus particulièrement, dans ce motif C, ladite structure aromatique peut être choisie parmi la structure isophtalique et/ou naphtalènique. Une structure téréphtalique est possible en particulier pour le composant diacide quand la diamine est cycloaliphatique. La structure cycloaliphatique peut être choisie parmi une structure à bse de cycle cyclohexane ou une structure à base de cycle décahydronaphtalènique (structure naphtalènique hydrogénée)
   - D est un motif amide optionnel différent de A, de B et de C, quand C est présent et choisi parmi les motifs amides aliphatiques issus de :
      ∘ aminoacides ou lactames en C₆ à C₁₂, de préférence C₆, C₁₁ et C₁₂ ou leurs mélanges,
      ∘ la réaction d'un diacide aliphatique linéaire en C₆ à C₁₈, de préférence en C₆ à C₁₂ et d'une diamine aliphatique linéaire en C₆ à C₁₈, de préférence en C₆ à C₁₂ ou leurs mélanges, et de préférence avec les motifs A et B étant respectivement à base de diamines x et x' comme définies ci-dessus.

La résine d'imprégnation c) peut être choisie parmi les résines constitutives de la matrice polymère a2) du premier matériau fibreux a1) du pré-imprégné, ou parmi les résines constitutives de la matrice polymère b2) du second matériau fibreux b1) de renfort b). De préférence, elle est choisie parmi les résines constitutives de la matrice polymère b2) du second matériau fibreux b1) de renfort b).

La résine d'imprégnation c) peut être de même nature chimique ou de nature chimique différente de la matrice polymère a2) du premier matériau fibreux a1) du pré-imprégné de la préforme. De préférence, la résine d'imprégnation est de même nature chimique que la matrice polymère a2) du premier matériau fibreux a1) du pré-imprégné de préforme.

La résine d'imprégnation c) peut être de même nature chimique ou de nature chimique différente de la matrice polymère b2) second matériau fibreux b1) de renfort b). De préférence, la résine d'imprégnation est de nature chimique différente de la matrice polymère b2) second matériau fibreux b1) de renfort b).

De préférence, la résine d'imprégnation c) est choisie parmi les résines qui sont inaptes à passer en cataphorèse, de manière à permettre une imprégnation de la préforme à une température plus basse. Parmi ces résines, on choisira de préférence des résines thermodurcissables ou thermoplastiques amorphes dont la Tg < 230°C, et de préférence Tg ≤ 150°C, et plus particulièrement inférieure ou égale à 120°C, et de manière encore plus préférée inférieure ou égale à 100°C, ou des résines thermoplastiques semi-cristallines dont la Tf < 230°C, de préférence inférieure ou égale à 200°C, et de manière encore plus préférée inférieure ou égale à 190°C.

La résine d'imprégnation c) et la résine constituant la matrice polymère b2) du second matériau fibreux b1) de renfort b) sont de préférence choisies de manière à être compatibles l'une avec l'autre. On pourra également choisir une résine d'imprégnation c) compatible avec la résine a2) imprégnant le premier matériau fibreux a1) de la préforme. Par « compatible », on entend que la résine d'imprégnation est apte à adhérer à la résine du ruban de renfort. En particulier, les deux résines possèdent une bonne affinité chimique l'une pour l'autre.

### La fabrication des pièces composites à partir de la préforme

Les pièces en matériau composite peuvent être obtenues selon différents procédés mis en œuvre postérieurement à la réalisation de la préforme, par injection de la résine d'imprégnation dans un moule contenant ladite préforme. Le terme « injection » doit être ici compris au sens large et regroupe différentes techniques de fabrication parmi lesquelles on peut mentionner le moulage en sac sous vide, le moulage en sac sous pression, le moulage en autoclave, le moulage par transfert de résine (RTM) et ses variantes tels que le moulage par transfert de résine par compression (C-RTM) et le moulage par transfert de résine sous vide (VARTM), le moulage par injection-réaction (RIM), le moulage par injection-réaction renforcé (R-RIM) et ses variantes, le moulage sous presse, le moulage par pultrusion, le moulage par thermo-estampage, le moulage par enroulement filamentaire, le moulage par infusion, le moulage dans un sac sous vide ou sous pression, ou encore par compression en voie humide (LCM ou WCM ou DFCM).

De préférence, le procédé de fabrication selon l'invention est mis en œuvre par moulage par transfert de résine (RTM), moulage par transfert de résine par compression (C-RTM), ou par infusion ou par compression en voie humide (LCM ou WCM ou DFCM).

Le moulage par transfert de résine est un procédé utilisant un ensemble de moulage à deux côtés qui forme les deux surfaces d'un matériau composite. Le côté inférieur est un moule rigide. Le côté supérieur peut être un moule rigide ou flexible. Des moules flexibles peuvent être fabriqués à partir de matériaux composites, de silicone ou de films polymères extrudés tels que le nylon. Les deux côtés s'emboîtent pour former une cavité de moulage. La caractéristique distinctive du moulage par transfert de résine est que le substrat fibreux, qui dans le cadre de la présente invention est une préforme, est placé dans cette cavité et que l'ensemble de moulage est fermé avant l'introduction de la résine d'imprégnation. Le moulage par transfert de résine comprend de nombreuses variations qui diffèrent par la mécanique d'introduction de la résine au niveau du substrat fibreux dans la cavité de moulage. Ces variations vont de l'infusion sous vide au moulage par transfert de résine sous vide (VARTM). Grâce au vide, le substrat fibreux est infusé et mieux imprégné par la résine. Un avantage de ce procédé est la grande quantité de matériau fibreux dans le matériau composite final obtenu. Ce procédé peut être réalisé à température ambiante ou élevée. Il existe également en version C-RTM.

Dans le cas de l'infusion, la résine est aspirée dans le substrat fibreux présent dans un moule de grande taille spécial par application d'un léger vide. Le substrat fibreux est infusé et complètement imprégné par la résine. Un avantage de ce procédé est la grande taille de la pièce composite fabriquée.

Dans le cas du moulage en voie humide, le dépôt de la résine se fait soit hors du moule sur une préforme plane soit dans le moule ouvert contenant la préforme.

Le procédé de fabrication selon l'invention met en œuvre un ruban de renfort dont la résine constitutive de la matrice polymère b2) possède une Tg élevée, supérieure à la température d'utilisation de la pièce composite finale. Par voie de conséquence, on peut utiliser une résine d'imprégnation c) dont la Tg est basse et qui, sans adjonction de ruban de renfort selon l'invention, ne serait pas ou peu adaptée à l'utilisation de la pièce dans des gammes de température élevées. Ainsi, on élargit la gamme de résines d'imprégnation utilisables pour la réalisation de pièces en matériau composite, obtenues en particulier par des procédés de type RTM ou LCM ou leurs variantes.

Par ailleurs, la mise en œuvre de ruban de renfort dont la résine constitutive de la matrice polymère possède une Tg très élevée, typiquement un polymère amorphe de Tg supérieure à la température maximum du cycle de cataphorèse, ou dont la résine constitutive de la matrice polymère possède une Tf élevée, typiquement un polymère semi-cristallin de Tf supérieure à la température maximum du cycle de cataphorèse, permet le passage de la pièce composite finale en cataphorèse même lorsque la résine d'imprégnation n'est initialement pas apte à subir une cataphorèse. Ainsi, on élargit la gamme de résines d'imprégnation utilisables pour la réalisation de pièces en matériau composite destinées à passer en cataphorèse.

Selon les fibres et la matrice polymère du ruban de renfort utilisé dans le cadre du procédé de fabrication de pièce composite selon l'invention, il est possible d'obtenir des pièces composites utilisables dans des gammes de température d'utilisation élevées même avec une résine d'imprégnation c) de basse Tg, ou des pièces composites aptes à passer en cataphorèse même avec une résine d'imprégnation c) de basse Tg ou basse Tf , selon qu'il s'agit d'une résine thermoplastique amorphe, thermodurcissable ou thermoplastique semi-cristalline., ou des pièces composites possédant conjointement les deux caractéristiques précédentes.

Comme décrit précédemment, les pièces composites comprennent une préforme comprenant un pré-imprégné formé d'un premier matériau fibreux a1) et d'une matrice polymère a2), et des renforts locaux b) se présentant sous la forme de rubans formés d'un second matériau fibreux b1) et d'une matrice polymère b2).

Selon un mode de réalisation préféré de l'invention, le pré-imprégné et le ruban de renfort constituant la préforme, ainsi que la résine d'imprégnation c) sont choisis de manière à fabriquer une pièce composite finale comprenant :
- au moins un pré-imprégné a1) comprenant des fibres de verre et une matrice polymère a2),
- au moins un ruban de renfort b) comprenant des fibres de carbone et une matrice polymère b2) comprenant du polyamide semi-cristallin haute température (PA HT) ou bien des résines thermoplastiques acryliques, tels que le Poly(méthacrylate de méthyle) (PMMA) ou les copolymères de méthacrylate de méthyle (MMA),
- une résine d'imprégnation c) de la préforme, de faible viscosité, inférieure à 100Pa.s et constituée d'une résine époxy, ou d'une résine polyamide (PA, PAHT), ou d'une résine acrylique.

Les pièces composites obtenues par le procédé de fabrication selon l'invention ont un coût de fabrication réduit, et possèdent des propriétés mécaniques et/ou thermiques optimales pour les applications souhaitées, parmi lesquelles : la mécanique, l'aéronautique (panneau de hublot, cône arrière de réacteur) et nautique (coque de voilier), l'automobile (châssis, capot, porte, déflecteur), l'énergie, la construction, le bâtiment, la santé et le médical, l'armée et l'armement, les sports et loisirs (cadre et fourche de vélo), et l'électronique.

## Revendications

1. Procédé de fabrication d'une pièce en matériau composite **caractérisé en ce que** ladite pièce est obtenue à partir d'une préforme comportant des renforts locaux et une première résine d'imprégnation de faible viscosité, inférieure à 100 Pa.s, de ladite préforme, ladite viscosité étant mesurée à l'aide d'un rhéomètre plan-plan, à une température d'introduction de la résine dans un moule, et à bas gradient correspondant à un taux de cisaillement inférieur à 1s⁻¹, et **en ce que** ledit procédé comprend les étapes suivantes :
- i) Réalisation de ladite préforme comprenant un premier matériau fibreux et lesdits renforts locaux se présentant sous la forme de renforts formés d'un second matériau fibreux ayant des fibres de tenue mécanique supérieure à celle des fibres du premier matériaux fibreux, de sorte qu'elles présentent un module ou une contrainte à la rupture supérieure d'au moins 30% à celui des fibres dudit premier matériaux fibreux, ledit second matériau fibreux étant pré-imprégné d'une deuxième résine polymère thermoplastique, acrylique ou polyamide, ayant une température de transition vitreuse (Tg), mesurée par calorimétrie différentielle à balayage (DSC) selon la norme ISO-11357-2, supérieure à 80°C, la quantité de deuxième résine polymère étant comprise entre 25% et 60% en volume par rapport au volume total dudit second matériau fibreux,
- ii) Imprégnation de ladite préforme par la première résine d'imprégnation,
- iii) Refroidissement de la dite préforme imprégnée pour obtenir la pièce.

2. Procédé selon la revendication 1, **caractérisé en ce que** la pièce est réalisée :
- par moulage par injection dans un moule fermé ou
- par dépôt de la résine sur la préforme soit hors du moule, soit dans le moule ouvert contenant la préforme.

3. Procédé selon l'une des revendications 1 à 2, **caractérisé en ce que** les renforts locaux se présentent soit sous forme de feutres ou de mats, soit sous forme de tissus, de non tissés (NCF « Non Crimp Fabrics »), de fibres unidirectionnelles ou de tresses, et de préférence, ils sont constitués de fibres continues et se présentent sous forme de nappes ou de rubans de tissus, de non tissés, de fibres unidirectionnelles (UD) ou de tresses.

4. Procédé selon l'une des revendications 1 à 3, **caractérisé en ce que** l'étape i) de réalisation de ladite préforme comprend le dépôt desdits renforts locaux en surface de ladite préforme et/ou l'insertion desdits renforts locaux dans la préforme :
- en empilant des couches de tissus de fibres ou des couches de fibres non tissée (NCF « Non Crimp Fabrics ») ou des couches de mat de fibres, lesdites fibres étant soit sèches soit faiblement pré-imprégnées par une troisième résine, éventuellement différente de la première et la deuxième résine, puis en déposant en surface les renforts formés du second matériau fibreux pour réaliser lesdits renforts locaux, ou
- en fabriquant la préforme à partir de rubans unidirectionnels faiblement pré-imprégnés par une troisième résine éventuellement différente de la première et de la deuxième résine, déposés au moyen d'un robot et en ajoutant, dans la même opération et de préférence au cœur de la préforme, les renforts, formés du second matériau fibreux totalement pré-imprégné, qui constituent lesdits renforts locaux.

5. Procédé selon l'une des revendications 1 à 4, **caractérisé en ce que** l'étape i) de réalisation de la préforme est mise en œuvre par un procédé de placement automatique des fibres, de type AFP (Automatic fiber placement) dans lequel lesdits renforts sont déposés en surface de la préforme et/ou insérés dans la préforme lors de sa fabrication, par un robot asservi.

6. Procédé selon la revendication 3, **caractérisé en ce que** les fibres de renfort constituant les nappes, les tissus, les NCF, les mats de fibres ou les rubans unidirectionnels sont co-mêlées à une ou plusieurs fibres de polymère

7. Procédé selon la revendication 6, **caractérisé en ce que** le ou les polymères constituant les fibres co-mêlées aux fibres de renfort, sont ductiles dans la plage de température d'utilisation du composite.

8. Procédé selon la revendication 6 ou 7, **caractérisé en ce que** le ou les polymères constituant les fibres co-mêlées aux fibres de renfort, comporte des charges conductrices électriquement et/ou thermiquement, qui sont de préférence des nanotubes de carbone.

9. Procédé selon les revendications 1 à 8 **caractérisé en ce que** la préforme est mise en forme par un procédé de thermo-estampage comportant une première étape de préchauffage de la préforme suivie d'une deuxième étape d'estampage à la forme finale, au moyen d'une presse à plateau chauffant.

10. Procédé selon l'une des revendications 1 à 8, **caractérisé en ce qu'**il s'agit d'un procédé de moulage par infusion, utilisé de préférence pour la fabrication de pièces d'éolienne.

11. Procédé selon l'une des revendications 1 à 8, **caractérisé en ce qu'**il s'agit d'un procédé de moulage par transfert de résine (RTM), de moulage par transfert de résine avec compression (C-RTM), ou de moulage par transfert de résine sous vide (VARTM).

12. Procédé selon l'une des revendications 1 à 8, **caractérisé en ce qu'**il s'agit d'un procédé de moulage par compression en voie humide (LCM ou WCM ou DFCM).

13. Procédé selon l'une des revendications 1 à 11, **caractérisé en ce que** la première résine d'imprégnation est injectée dans un moule fermé à une pression comprise entre 500 mbar et 200 bar, de préférence comprise entre 800mbar et 100 bar et de manière davantage préférée comprise entre 800mbar et 60 bar.

14. Procédé selon l'une des revendications 1 à 13, **caractérisé en ce que** la première résine d'imprégnation présente, à la température d'injection, dans le cas d'un procédé en moule fermé ou à la température de moulage, dans le cas d'un procédé en moule ouvert, une viscosité inférieure à 100 Pa.s, de préférence inférieure à 20 Pa.s et encore plus préférée, inférieure à 0.2 Pa.s.

15. Procédé selon l'une des revendications 1 à 14, **caractérisé en ce que** le premier matériau fibreux est en fibres de verre.

16. Procédé selon l'une des revendications 1 à 15, **caractérisé en ce que** le premier matériau fibreux est pré-imprégné d'une troisième résine polymère.

17. Procédé selon l'une des revendications 1 à 16, **caractérisé en ce que** le second matériau fibreux de renfort est en fibres de carbone.

18. Procédé selon l'une des revendications 1 à 17, **caractérisé en ce que** le premier matériau fibreux est en fibres de verre et le second matériau fibreux du renfort est en fibres de carbone.

19. Procédé selon la revendication 1, **caractérisé en ce que** la deuxième résine polymère imprégnant le second matériau fibreux est choisie parmi les résines thermoplastiques amorphes ayant une Tg supérieure ou égale à 80°C, de préférence supérieure ou égale à 180°C, et de manière davantage préférée supérieure ou égale à 230°C et inférieure à 250°C.

20. Procédé selon la revendication 1, **caractérisé en ce que** la deuxième résine polymère imprégnant le second matériau fibreux est choisie parmi les résines thermoplastiques semi-cristallines présentant une Tg supérieure ou égale à 80°C, de préférence supérieure ou égale à 120°C, et de manière davantage préférée supérieure ou égale à 150°C; et une Tf supérieure ou égale à 180°C, de préférence supérieure ou égale à 200°C, et de manière davantage préférée supérieure ou égale à 230°C et inférieure à 420°C, de préférence inférieure à 390°C et de manière davantage préférée inférieure à 300°C.

21. Procédé selon la revendication 1 et 19 ou 20, **caractérisé en ce que** la deuxième résine polymère imprégnant le second matériau fibreux est une résine thermoplastique choisie parmi : les polyamides (PA) en particulier les polyamides aromatiques ou semi aromatiques y compris les copolyamides, semi-cristallins ou amorphes, plus particulièrement les polyamides semi-cristallins haute température (PA HT), ou encore les résines thermoplastiques acryliques, tels que le Poly(méthacrylate de méthyle) (PMMA) ou les copolymères de méthacrylate de méthyle (MMA), ou leurs mélanges.

22. Procédé selon la revendication 21, **caractérisé en ce que** la deuxième résine polymère imprégnant le second matériau fibreux est une résine semi-cristalline sélectionnée parmi les polyamides (PA) en particulier les polyamides aromatiques ou semi aromatiques y compris les copolyamides, de préférence un polyamide semi-cristallin haute température (PA HT) préférentiellement choisi parmi un polyamide x.T ou un copolyamide x.T/x'.T, dans lesquels T est l'acide téréphtalique et x est une diamine aliphatique linéaire en C₉ à C₁₈, de préférence en C₉ à C₁₂, et x' est une diamine différente de x, de sorte que le rapport molaire [ x / (x + x') ] soit compris entre 15% et 45% bornes incluses, x' étant choisie parmi une diamine monoramifiée par un méthyle ou un éthyle et ayant une différence de longueur de chaîne d'au moins un atome de carbone avec la diamine x, ou parmi la xylylène diamine ou une diamine linéaire aliphatique en C₄ à C₁₈ dans le cas où x est en C₁₀ à C₁₈, ou x' en C₉ à C₁₈ dans le cas où x est en C₉ ou C₁₀.

23. Procédé selon l'une des revendications 1 à 22, **caractérisé en ce que** le second matériau fibreux du renfort local comprend une quantité de deuxième résine polymère comprise entre 35% et 60% en volume, et de préférence entre 35% et 50% en volume par rapport au volume total dudit second matériau fibreux.

24. Procédé selon la revendication 1, **caractérisé en ce que** la première résine d'imprégnation possède une Tg inférieure à 230°C, de préférence inférieure ou égale à 150°C, de préférence inférieure ou égale à 120°C, et de manière encore plus préférée inférieure ou égale à 100°C.

25. Procédé selon la revendication 1, **caractérisé en ce que** la première résine d'imprégnation est semi-cristalline et possède une Tf inférieure à 230°C, de préférence inférieure ou égale à 200°C, et de manière encore plus préférée inférieure ou égale à 190°C.

26. Procédé selon l'une des revendications 1 à 25, **caractérisé en ce que** la première résine d'imprégnation est choisie parmi : les résines thermodurcissables, de préférence polyester, vinyl-ester, acryliques ou époxy (époxy-amine), les résines thermodurcissables polyimides, en particulier la résine bismaléimide, les résines thermodurcissables polyuréthanes ; ou parmi les résines thermoplastiques, de préférence les résines polyamides (PA, PA HT), les résines acryliques ou leur mélange.

27. Procédé selon l'une des revendications 1 à 26, **caractérisé en ce que** la première résine d'imprégnation est choisie parmi les résines époxy et la deuxième résine polymère du renfort en second matériau fibreux est une résine polyamide (PA, PA HT).

28. Procédé selon l'une des revendications 1 à 27, **caractérisé en ce que** la première résine d'imprégnation de la préforme est compatible avec ladite deuxième d'imprégnation du second matériau fibreux et/ou avec la troisième résine d'imprégnation du premier matériau fibreux.

29. Pièce en matériau composite, **caractérisée en ce qu'**elle comprend une préforme imprégnée d'une première résine d'imprégnation, ladite préforme comprenant un assemblage d'un premier matériau fibreux et de renforts locaux formés d'un second matériau fibreux ayant des fibres de tenue supérieure à celle des fibres du premier matériau fibreux, et présentant un module supérieur d'au moins 30%, et de préférence supérieur à au moins 100% à celui des fibres dudit premier matériau fibreux, ledit second matériau fibreux étant pré-imprégné par une deuxième résine polymère thermoplastique, acrylique ou polyamide, ayant une température de transition vitreuse (Tg), mesurée par calorimétrie différentielle à balayage (DSC) selon la norme ISO-11357-2, supérieure à 80°C, la quantité de deuxième résine polymère étant comprise entre 25% et 60% en volume par rapport au volume total dudit second matériau fibreux, ladite préforme étant imprégnée de ladite première résine d'imprégnation.

30. Pièce selon la revendication 29, **caractérisée en ce qu'**elle est obtenue par un procédé tel que défini selon l'une des revendications 1 à 28.

31. Pièce selon l'une des revendications 29 à 30, **caractérisé en ce que** le premier matériau fibreux est pré-imprégné d'une troisième résine polymère

32. Pièce selon l'une des revendications 29 à 31, **caractérisée en ce qu'**elle comprend :
• au moins une préforme comprenant un premier matériau fibreux en fibres de verre et éventuellement pré-imprégné par une résine polymère,
• au moins un renfort comprenant un second matériau fibreux en fibres de carbone, ledit second matériau fibreux étant pré-imprégné d'une résine polymère thermoplastique ayant une température de transition vitreuse (Tg) supérieure à 80°C, de préférence, une résine de polyamide (PA, PAHT),
• une résine d'imprégnation de ladite préforme, de faible viscosité, inférieure à 100Pa.s, ladite viscosité étant mesurée à l'aide d'un rhéomètre plan-plan, à une température d'introduction de la résine dans un moule, et à bas gradient correspondant à un taux de cisaillement inférieur à 1s⁻¹, ladite résine étant choisie parmi les résines époxy, les résines polyamide (PA ou PAHT) ou les résines acryliques.

33. Pièce selon la revendication 29, **caractérisée en ce que** la résine polymère du renfort comprenant le second matériau fibreux est en outre choisie parmi les résines thermoplastiques acryliques, tels que le Poly(méthacrylate de méthyle) (PMMA) ou les copolymères de méthacrylate de méthyle (MMA).

34. Utilisation d'une pièce selon l'une des revendications 29 à 33, pour des applications dans la construction mécanique, aéronautique, navale ou le nautisme, l'automobile, notamment pour les châssis d'automobiles, l'énergie éolienne, hydrolienne ou hydroélectrique (éolienne, hydrolienne, turbines) ou dans le bâtiment, ou encore pour la santé et le médical, l'armée et l'armement, les sports et loisirs, l'électronique, ou les centrales solaires (miroirs) ou photovoltaïques (panneaux).

## Patentansprüche

1. Verfahren zur Herstellung eines Teils aus Verbundstoff, **dadurch gekennzeichnet, dass** das Teil ausgehend von einer Vorform erhalten wird, die lokale Verstärkungen und ein erstes Imprägnierungsharz geringer Viskosität, niedriger als 100 Pa.s, der Vorform beinhaltet, wobei die Viskosität mithilfe eines Platte-Platte-Rheometers bei einer Einleitungstemperatur des Harzes in eine Form und bei einem niederen Gradienten gemessen wird, der einer Scherrate niedriger als 1s⁻¹ entspricht, und dadurch, dass das Verfahren die folgenden Schritte umfasst:
- i) Anfertigung der Vorform, die einen ersten Faserstoff und die lokalen Verstärkungen, die in Form von aus einem zweiten Faserstoff gebildeten Verstärkungen, das Fasern mechanischer Belastbarkeit aufweist, die höher als jene der Fasern des ersten Faserstoffs ist, vorliegen, derart umfasst, dass sie einen Reißmodul oder eine Bruchspannung um mindestens 30 % höher als jener/jene der Fasern des ersten Faserstoffs vorweisen, wobei der zweite Faserstoff mit einem zweiten thermoplastischen Acryl- oder Polyamid-Polymerharz vorimprägniert ist, das eine Glasübergangstemperatur (Tg), gemessen durch dynamische Differenzkalorimetrie (DSC) gemäß dem Standard ISO-11357-2, höher als 80 °C aufweist, wobei die Menge des zweiten Polymerharzes bezogen auf das Gesamtvolumen des zweiten Faserstoffs im Bereich zwischen 25 Vol.-% und 60 Vol.-% liegt,
- ii) Imprägnierung der Vorform durch das erste Imprägnierungsharz,
- iii) Kühlung der imprägnierten Vorform, um das Teil zu erhalten.

2. Verfahren nach Anspruch 1, **dadurch gekennzeichnet, dass** das Teil angefertigt wird:
- durch Spritzguss in eine geschlossene Form oder
- durch Ablagerung des Harzes auf die Vorform entweder außerhalb der Form oder in der offen Form, die die Vorform enthält.

3. Verfahren nach einem der Ansprüche 1 bis 2, **dadurch gekennzeichnet, dass** die lokalen Verstärkungen entweder in Form von Filzen oder von Matten oder in Form von Geweben, von Vliesen (NCF "Non Crimp Fabrics"), von unidirektionalen Fasern oder von Geflechten vorliegen, und sie vorzugsweise aus Endlosfasern aufgebaut sind und in Form von Bahnen oder von Bändern aus Geweben, aus Vliesen, aus unidirektionalen (UD) Fasern oder aus Geflechten vorliegen.

4. Verfahren nach einem der Ansprüche 1 bis 3, **dadurch gekennzeichnet, dass** der Schritt i) der Anfertigung der Vorform die Ablagerung der lokalen Verstärkungen auf der Oberfläche der Vorform und/oder das Einfügen der lokalen Verstärkungen in die Vorform umfasst:
- durch Stapeln von Schichten von Gewebe aus Fasern oder von Schichten aus Faservlies (NCF "Non Crimp Fabrics") oder von Schichten aus Fasermatte, wobei die Fasern entweder trocken oder durch ein drittes Harz, gegebenenfalls von dem ersten und dem zweiten Harz verschieden, leicht vorimprägniert sind, anschließend durch Ablagern von aus dem zweiten Faserstoff gebildeten Verstärkungen auf der Oberfläche, um die lokalen Verstärkungen anzufertigen, oder
- durch Herstellen der Vorform ausgehend von leicht durch ein drittes Harz, gegebenenfalls von dem ersten und dem zweiten Harz verschieden, vorimprägnierten Bändern, mittels eines Roboters abgelagert, und unter Hinzufügen in dem gleichen Vorgang und vorzugsweise im Kern der Vorform der aus dem zweiten, vollständig aus vorimprägniertem Faserstoff gebildeten Verstärkungen, die die lokalen Verstärkungen aufbauen.

5. Verfahren nach einem der Ansprüche 1 bis 4, **dadurch gekennzeichnet, dass** der Schritt i) der Anfertigung der Vorform durch ein Verfahren des automatischen Platzierens der Fasern vom Typ AFP (Automatic fiber placement) durchgeführt wird, wobei die Verstärkungen durch einen gesteuerten Roboter auf der Oberfläche der Vorform abgelagert und/oder während ihrer Herstellung in die Vorform eingefügt werden.

6. Verfahren nach Anspruch 3, **dadurch gekennzeichnet, dass** die Verstärkungsfasern, die die Bahnen, Gewebe, NCF, Fasermatten oder unidirektionalen Bänder aufbauen, mit einer oder mehreren Polymerfasern zusammengemischt werden

7. Verfahren nach Anspruch 6, **dadurch gekennzeichnet, dass** das oder die Polymere, die die mit den Verstärkungsfasern zusammengemischten Polymere aufbauen, in dem Temperaturbereich der Verwendung des Verbundstoffs dehnbar sind.

8. Verfahren nach Anspruch 6 oder 7, **dadurch gekennzeichnet, dass** das oder die Polymere, die die mit den Verstärkungsfasern zusammengemischten Polymere aufbauen, elektrisch und/oder thermisch leitenden Füllstoffe beinhalten, die vorzugsweise Kohlenstoffnanoröhrchen sind.

9. Verfahren nach Ansprüchen 1 bis 8, **dadurch gekennzeichnet, dass** die Vorform durch ein Verfahren des Thermoprägens geformt wird, das einen ersten Schritt des Vorwärmens der Vorform gefolgt von einem zweiten Schritt des Prägens zu der endgültigen Form mittels einer Presse mit erwärmbarer Platte beinhaltet.

10. Verfahren nach einem der Ansprüche 1 bis 8, **dadurch gekennzeichnet, dass** es sich um ein Infusionsformungsverfahren handelt, das vorzugsweise zur Herstellung von Windkraftanlagenteilen verwendet wird.

11. Verfahren nach einem der Ansprüche 1 bis 8, **dadurch gekennzeichnet, dass** es sich um ein Harztransferformungsverfahren (RTM), Kompressions-Harztransferformungsverfahren(C-RTM) oder Vakuum-Harztransferformungsverfahren (VARTM) handelt.

12. Verfahren nach einem der Ansprüche 1 bis 8, **dadurch gekennzeichnet, dass** es sich um ein Nassstrecken-Kompressionsformungsverfahren handelt (LCM oder WCM oder DFCM).

13. Verfahren nach einem der Ansprüche 1 bis 11, **dadurch gekennzeichnet, dass** das erste Imprägnierungsharz bei einem Druck im Bereich zwischen 500 mbar und 200 bar, vorzugsweise im Bereich zwischen 800 mbar und 100 bar und auf mehr bevorzugte Weise im Bereich zwischen 800 mbar und 60 bar in eine geschlossene Form eingespritzt wird.

14. Verfahren nach einem der Ansprüche 1 bis 13, **dadurch gekennzeichnet, dass** das erste Imprägnierungsharz, bei der Einspritztemperatur im Fall eines Verfahrens mit geschlossener Form, oder bei der Formungstemperatur im Fall eines Verfahrens mit offener Form, eine Viskosität niedriger als 100 Pa.s, vorzugsweise niedriger als 20 Pa.s und noch mehr bevorzugt niedriger als 0,2 Pa.s vorweist.

15. Verfahren nach einem der Ansprüche 1 bis 14, **dadurch gekennzeichnet, dass** der erste Faserstoff aus Glasfasern besteht.

16. Verfahren nach einem der Ansprüche 1 bis 15, **dadurch gekennzeichnet, dass** der erste Faserstoff mit einem dritten Polymerharz vorimprägniert ist.

17. Verfahren nach einem der Ansprüche 1 bis 16, **dadurch gekennzeichnet, dass** der zweite Verstärkungsfaserstoff aus Kohlenstofffasern besteht.

18. Verfahren nach einem der Ansprüche 1 bis 17, **dadurch gekennzeichnet, dass** der erste Faserstoff aus Glasfasern besteht und der zweite Verstärkungsfaserstoff aus Kohlenstofffasern besteht.

19. Verfahren nach Anspruch 1, **dadurch gekennzeichnet, dass** das zweite Polymerharz, das den zweiten Faserstoff imprägniert, gewählt ist aus amorphen thermoplastischen Harzen mit einer Tg höher als oder gleich 80 °C, vorzugsweise höher als oder gleich 180 °C und auf mehr bevorzugte Weise höher als oder gleich 230 °C und niedriger als 250 °C.

20. Verfahren nach Anspruch 1, **dadurch gekennzeichnet, dass** das zweite Polymerharz, das den zweiten Faserstoff imprägniert, gewählt ist aus halbkristallinen thermoplastischen Harzen, die eine Tg höher als oder gleich 80 °C, vorzugsweise höher als oder gleich 120 °C und auf mehr bevorzugte Weise höher als oder gleich 150 °C; und eine Schmelztemperatur höher als oder gleich 180 °C, vorzugsweise höher als oder gleich 200 °C und auf mehr bevorzugte Weise höher als oder gleich 230 °C und niedriger als 420 °C, vorzugsweise niedriger als 390 °C und auf mehr bevorzugte Weise niedriger als 300 °C vorweisen.

21. Verfahren nach Anspruch 1 und 19 oder 20, **dadurch gekennzeichnet, dass** das zweite Polymerharz, das den zweiten Faserstoff imprägniert, ein thermoplastisches Harz ist, gewählt aus: Polyamiden (PA), insbesondere aromatischen oder halbaromatischen Polyamiden, einschließlich halbkristallinen oder amorphen Copolyamiden, vor allem halbkristallinen Hochtemperatur-Polyamiden (PA HT) oder auch thermoplastischen Acrylharzen, wie Poly(methylmethacrylat) (PMMA) oder Copolymeren von Methylmethacrylat (MMA) oder deren Mischungen.

22. Verfahren nach Anspruch 21, **dadurch gekennzeichnet, dass** das zweite Polymerharz, das den zweiten Faserstoff imprägniert, ein halbkristallines Harz ist, ausgewählt aus Polyamiden (PA), insbesondere aromatischen oder halbaromatischen Polyamiden, einschließlich Copolyamiden, vorzugsweise einem halbkristallinen Hochtemperatur-Polyamid (PA HT), bevorzugterweise gewählt aus einem Polyamid x.T oder einem Copolyamid x.T/x'.T, in denen T Terephthalsäure ist und x ein lineares aliphatisches C₉- bis C₁₈-Diamin ist, vorzugsweise C₉ bis C₁₂, und x' ein von x verschiedenes Diamin ist, derart, dass das molare Verhältnis [ x / (x + x') ] im Bereich zwischen 15 % und 45 %, Grenzen inbegriffen, liegt, wobei x' gewählt ist aus einem durch ein Methyl oder ein Ethyl monoverzweigtes Diamin und eine Kettenlängendifferenz zu dem Diamin x von mindestens einem Kohlenstoffatom aufweist, oder aus Xylylendiamin oder einem aliphatischen linearen C₄- bis C₁₈-Diamin in dem Fall, in dem x C₁₀ bis C₁₈ ist, oder x' C₉ bis C₁₈ ist in dem Fall, in dem x C₉ oder C₁₀ ist.

23. Verfahren nach einem der Ansprüche 1 bis 22, **dadurch gekennzeichnet, dass** der zweite lokale Verstärkungsfaserstoff bezogen auf das Gesamtvolumen des zweiten Faserstoffs eine Menge an dem zweiten Polymerharz im Bereich zwischen 35 Vol.-% und 60 Vol.-%, und vorzugsweise zwischen 35 Vol.-% und 50 Vol.-% umfasst.

24. Verfahren nach Anspruch 1, **dadurch gekennzeichnet, dass** das erste Imprägnierungsharz eine Schmelztemperatur niedriger als 230 °C, vorzugsweise niedriger als oder gleich 150 °C, vorzugsweise niedriger als oder gleich 120 °C, und auf noch mehr bevorzugte Weise niedriger als oder gleich 100 °C besitzt.

25. Verfahren nach Anspruch 1, **dadurch gekennzeichnet, dass** das erste Imprägnierungsharz halbkristallin ist und eine Tf niedriger als 230 °C, vorzugsweise niedriger als oder gleich 200 °C, und auf noch mehr bevorzugte Weise niedriger als oder gleich 190 °C besitzt.

26. Verfahren nach einem der Ansprüche 1 bis 25, **dadurch gekennzeichnet, dass** das erste Imprägnierungsharz gewählt ist aus: duroplastischen Harzen, vorzugsweise Polyester, Vinylester, Acrylen oder Epoxid (Epoxid-Amin), duroplastischen Polyimidharzen, insbesondere Bismaleimidharz, duroplastischen Polyurethanharzen; oder aus thermoplastischen Harzen, vorzugsweise Polyamidharzen (PA, PA HT), Acrylharzen oder deren Mischung.

27. Verfahren nach einem der Ansprüche 1 bis 26, **dadurch gekennzeichnet, dass** das erste Imprägnierungsharz gewählt ist aus Epoxidharzen und das zweite Verstärkungspolymerharz aus dem zweiten Faserstoff ein Polyamidharz (PA, PA HT) ist.

28. Verfahren nach einem der Ansprüche 1 bis 27, **dadurch gekennzeichnet, dass** das erste Imprägnierungsharz der Vorform mit dem zweiten zur Imprägnierung des zweiten Faserstoffs und/oder mit dem dritten Imprägnierungsharz des ersten Faserstoffs kompatibel ist.

29. Teil aus Verbundstoff, **dadurch gekennzeichnet, dass** es eine erste mit einem ersten Imprägnierungsharz imprägnierte Vorform umfasst, wobei die Vorform eine Anordnung aus einem ersten Faserstoff und aus lokalen Verstärkungen umfasst, gebildet aus einem zweiten Faserstoff, das Fasern mit höherer Belastbarkeit aufweist als jene der Fasern des ersten Faserstoffs, und einen Modul von mindestens 30 % höher und vorzugsweise mindestens 100 % höher als jener der Fasern des ersten Faserstoffs vorweisen, wobei der zweite Faserstoff durch ein zweites thermoplastischen Acryl- oder Polyamid-Polymerharz vorimprägniert ist, das eine Glasübergangstemperatur (Tg), gemessen durch dynamische Differenzkalorimetrie (DSC) gemäß dem Standard ISO-11357-2, höher als 80 °C aufweist, wobei die Menge des zweiten Polymerharzes bezogen auf das Gesamtvolumen des zweiten Faserstoffs im Bereich zwischen 25 Vol.-% und 60 Vol.-% liegt, wobei die Vorform mit dem ersten Imprägnierungsharz imprägniert ist.

30. Teil nach Anspruch 29, **dadurch gekennzeichnet, dass** es durch ein Verfahren wie nach einem der Ansprüche 1 bis 28 definiert erhalten wird.

31. Teil nach einem der Ansprüche 29 bis 30, **dadurch gekennzeichnet, dass** der erste Faserstoff mit einem dritten Polymerharz vorimprägniert ist

32. Teil nach einem der Ansprüche 29 bis 31, **dadurch gekennzeichnet, dass** es Folgendes umfasst:
• mindestens eine Vorform, umfassend einen ersten Faserstoff aus Glasfasern und gegebenenfalls durch ein Polymerharz vorimprägniert,
• mindestens eine Verstärkung, umfassend einen zweiten Faserstoff aus Kohlenstofffasern, wobei der zweite Faserstoff mit einem thermoplastischen Polymerharz vorimprägniert ist, das eine Glasübergangstemperatur (Tg) höher als 80 °C aufweist, vorzugsweise einem Polyamidharz (PA, PAHT),
• ein Imprägnierungsharz der Vorform von geringer Viskosität, niedriger als 100 Pa.s, wobei die Viskosität mithilfe eines Platte-Platte-Rheometers bei einer Einleitungstemperatur des Harzes in eine Form und bei niederem Gradienten gemessen wird, der einer Scherrate niedriger als 1s⁻¹ entspricht, wobei das Harz gewählt ist aus Epoxidharzen, Polyamidharzen (PA oder PAHT) oder Acrylharzen.

33. Teil nach Anspruch 29, **dadurch gekennzeichnet, dass** das Verstärkungspolymerharz, das den zweiten Faserstoff umfasst, ferner gewählt ist aus thermoplastischen Acrylharzen, wie Poly(methylmethacrylat) (PMMA) oder Copolymeren von Methylmethacrylat (MMA).

34. Verwendung eines Teils nach einem der Ansprüche 29 bis 33 für Anwendungen im Maschinenbau, Luftfahrzeugbau, Schiffbau oder Wassersport, Automobilbau, besonders für Automobilfahrgestelle, für Wind-, Gezeiten- oder hydroelektrische Energie (Windkraftanlage, Gezeitenkraftwerk, Turbinen) oder im Baugewerbe oder auch für das Gesundheits- und Medizinwesen, die Armee und Rüstung, Sport und Freizeit, Elektronik oder Solar- (Spiegel) oder Photovoltaikanlagen (Paneele).

## Claims

1. A method for manufacturing a part made of composite material, **characterized in that** said part is obtained from a preform comprising local reinforcements and a first impregnation resin, of low-viscosity, less than 100 Pa.s, for said preform, said viscosity being measured using a plane-plane rheometer, at a temperature for introducing the resin into a mold, and at a low gradient corresponding to a shear rate of less than 1s⁻¹, and **in that** said method comprises the following steps:
- i) Production of said preform comprising a first fibrous material and said local reinforcements which are provided in the form of reinforcements formed from a second fibrous material having fibers with a greater mechanical strength than that of the fibers of the first fibrous material, so that they have a modulus or stress at break at least 30% greater than that of the fibers of said first fibrous material, said second fibrous material being pre-impregnated with a second, acrylic or polyamide, thermoplastic polymer resin, having a glass transition temperature (Tg) measured by differential scanning calorimetry (DSC) according to standard ISO-1 1357-2 greater than 80°C, the amount of second polymer resin being between 25% and 60% by volume with respect to the total volume of said second fibrous material,
- (ii) Impregnating the said preform by the first impregnation resin,
- iii) Cooling of said impregnated preform to obtain the part.

2. The method according to claim 1, **characterized in that** the part is made:
- by injection molding into a closed mold or
- by depositing the resin on the preform either outside the mold or in the open mold containing the preform.

3. The method according to one of claims 1 to 2, **characterized in that** local reinforcements are provided either in the form of felts or mats, or in the form of woven fabrics, of non-woven fabrics (NCF "Non Crimp Fabrics"), of unidirectional fibers or of braids, and preferably they consist of continuous fibers and are provided in the form of webs or of strips of woven fabrics, of non-woven fabrics, of unidirectional fibers (UD) or of braids.

4. The method according to one of claims 1 to 3, **characterized in that** step i) of the production of said preform includes the deposition of said local reinforcements at the surface of said preform and/or the insertion of said local reinforcements into the preform:
- by stacking layers of woven fabrics of fibers or layers of nonwoven fibers (NCF "Non Crimp Fabrics") or layers of mats of fiber, said fibers being either dry or weakly pre-impregnated by a third resin, optionally different from the first and second resin, and by then depositing at the surface the reinforcements formed of the second fibrous material to carry out said local reinforcements, or
- by manufacturing the preform from unidirectional strips weakly pre-impregnated with a third resin optionally different from the first and second resin, deposited by means of a robot and by adding, in the same operation and preferably at the core of the preform, reinforcements, formed of the second completely pre-impregnated fibrous material which constitute said local reinforcements.

5. The method according to one of claims 1 to 4 **characterized in that** step i) of the production of the preform is implemented by an automatic fibers placement (AFP) process in which said reinforcements are deposited at the surface of the preform and / or inserted into the preform during its manufacture, by a servo robot.

6. The method according to claim 3, **characterized in that** the reinforcing fibers constituting the webs, the woven fabrics, the NCF, the fiber mats or the unidirectional strips are comixed with one or more polymer fibers

7. The method according to claim 6, **characterized in that** the polymer or polymers constituting the fibers comixed with the reinforcing fibers are ductile in the temperature range of use of the composite.

8. The method according to claim 6 or 7, **characterized in that** the polymer or polymers constituting the fibers co-mixed with the reinforcing fibers, comprises electrically and / or thermally conductive charges, which are preferably carbon nanotubes.

9. The method according to claims 1 to 8, **characterized in that** the preform is shaped by a thermo-stamping process comprising a first step of preheating the preform followed by a second step of stamping the final shape, by means of a heating platen press.

10. The method according to one of claims 1 to 8, **characterized in that** it is an infusion molding method, used preferably for the manufacture of wind turbine parts.

11. The method according to one of claims 1 to 8, **characterized in that** it is a process of resin transfer molding (RTM), of resin transfer molding with compression (C-RTM), or of vacuum assisted resin transfer molding (VARTM).

12. The method according to one of claims 1 to 8, **characterized in that** it is a wet compression molding process (LCM or WCM or DFCM).

13. The method according to one of claims 1 to 11 **characterized in that** the first impregnation resin is injected into a closed mold at a pressure between 500 mbar and 200 bar, preferably between 800 mbar and 100 bar and even more preferably between 800 mbar and 60 bar.

14. The method according to one of claims 1 to 13, **characterized in that** the first impregnation resin presents, at the injection temperature, in the case of a closed mold process, or at the molding temperature, in the case of an open mold process, a viscosity of less than 100 Pa.s, preferably less than 20 Pa.s and even more preferred, less than 0.2 Pa.s.

15. The method according to one of claims 1 to 14, **characterized in that** the first fibrous material is made of glass fibers.

16. The method according to one of claims 1 to 15 **characterized in that** the first fibrous material is pre-impregnated with a third polymer resin.

17. The method according to one of claims 1 to 16, **characterized in that** the second reinforcing fibrous material is made of carbon fibers.

18. The method according to one of claims 1 to 17, **characterized in that** the first fibrous material is made of glass fibers and the second fibrous material of the reinforcement is made of carbon fibers.

19. The method according to claim 1, **characterized in that** the second polymer resin impregnating the second fibrous material is selected from amorphous thermoplastic resins having a Tg greater than or equal to 80°C, preferably greater than or equal to 180°C, and more preferably greater than or equal to 230°C and less than 250°C.

20. The method according to claim 1, **characterized in that** the second polymer resin impregnating the second fibrous material is selected from semi-crystalline thermoplastic resins having a Tg greater than or equal to 80°C, preferably greater or equal to 120°C and more preferably greater than or equal to 150°C; and a Tm greater than or equal to 180°C, preferably greater than or equal to 200°C, and more preferably greater than or equal to 230°C and less than 420°C, preferably less than 390°C and more preferably less than 300°C.

21. The method according to claim 1 and 19 or 20, **characterized in that** the second polymer resin impregnating the second fibrous material is a thermoplastic resin selected from: polyamides (PA) in particular aromatic or semi-aromatic polyamides including copolyamides, semi-crystalline or amorphous, more particularly high temperature semi-crystalline polyamides (HTPA), or acrylic thermoplastic resins, such as poly (methyl methacrylate) (PMMA) or copolymers of methyl methacrylate (MMA), or combinations thereof.

22. The method according to claim 21, **characterized in that** the second polymer resin impregnating the second fibrous material is a semi-crystalline resin selected from polyamides (PA), in particular aromatic or semi-aromatic polyamides, including copolyamides, preferably a high temperature crystalline semi-polyamide (HTPA) preferably selected from a polyamide x.T or a copolyamide x.T / x'.T, in which T is terephthalic acid and x is a linear aliphatic diamine in C₉ to C₁₈, preferably in C₉ to C₁₂, and x' is a diamine other than x, so that the molar ratio [x / (x + x')] is between 15% and 45%, limits included, x' being selected from a diamine monobranched by a methyl or an ethyl and having a chain length difference of at least one carbon atom with the diamine x, or from xylylene diamine or a linear C₄ to C₁₈ aliphatic diamine in the case where x is in C₁₀ at C₁₈, or x' in C₉ to C₁₈ in the case where x is in C₉ or C₁₀.

23. The method according to one of claims 1 to 22, **characterized in that** the second fibrous material of the local reinforcement comprises an amount of second polymer resin of between 35% and 60% by volume, and preferably between 35% and 50% by volume with respect to the total volume of said second fibrous material.

24. The method according to claim 1, **characterized in that** the first impregnation resin has a Tg less than 230°C, preferably less than or equal to 150°C, preferably less than or equal to 120°C, and even more preferably less than or equal to 100°C.

25. The method according to claim 1, **characterized in that** the first impregnation resin is semi-crystalline and has a Tm less than 230°C, preferably less than or equal to 200°C, and even more preferably less than or equal to 190°C.

26. The method according to one of claims 1 to 25, **characterized in that** the first impregnation resin is selected from: thermosetting resins, preferably polyester, vinyl ester, acrylic or epoxy (epoxy-amine), polyamide thermosetting resins, in particular bismaleimide resin, thermosetting polyurethane resins or from thermoplastic resins, preferably polyamide resins (PA, HTPA), acrylic resins or a mixture thereof.

27. The method according to one of claims 1 to 26, **characterized in that** the first impregnation resin is selected from epoxy resins and the second polymer resin of the reinforcement of second fibrous material is a polyamide resin (PA, HTPA).

28. The method according to one of claims 1 to 27, **characterized in that** the first impregnation resin of the preform is compatible with said second impregnation resin of the second fibrous material and / or with the third impregnation resin of the first fibrous material.

29. A part made of composite material, **characterized in that** it comprises a preform impregnated with a first impregnation resin, said preform comprising an assembly of a first fibrous material and local reinforcements formed of a second fibrous material having fibers with a greater strength than that of the fibers of the first fibrous material, and having a modulus greater by at least 30% and preferably greater than at least 100% than that of the fibers of said first fibrous material, said second fibrous material being pre-impregnated with a second thermoplastic, acrylic or polyamide polymer resin, having a glass transition temperature (Tg), measured by differential scanning calorimetry (DSC) according to standard ISO-1 1357-2, greater than 80°C, the amount of the second polymer resin being between 25% and 60% by volume with respect to the total volume of said second fibrous material, said preform being impregnated with said first impregnation resin.

30. The part according to claim 29, **characterized in that** it is obtained by a method according to anyone of claims 1 to 28.

31. The part according to one of claims 29 to 30, **characterized in that** the first fibrous material is pre-impregnated with a third polymer resin

32. The part according to one of claims 29 to 31, **characterized in that** it includes:
• at least one preform including a first fibrous material in glass fibers and optionally pre-impregnated with a polymer resin,
• at least one reinforcement including a second fibrous material in carbon fiber, the second fibrous material being pre- impregnated with a thermoplastic polymer resin having a glass transition temperature (Tg) greater than 80°C preferably, a polyamide resin (PA, HTPA),
• a resin impregnating said preform, with a low viscosity, less than 100 Pa.s, said viscosity being measured using a plane-plane rheometer, at a temperature of introduction of resin into a mold, and low gradient corresponding to a rate of shearing below 1s⁻¹, said resin being selected from epoxy resins, polyamide resins (PA or HTPA) or acrylic resins.

33. The part according to claim 29, **characterized in that** the polymer resin of the reinforcement comprising the second fibrous material is also selected from acrylic thermoplastic resins, such as poly (methyl methacrylate) (PMMA) or copolymers of methyl methacrylate (MMA).

34. The use of a part according to anyone of claims 29 to 33, for applications in mechanical, aeronautical, naval or nautical construction, the automobile industry, in particular for automobile frames, wind power, tidal power or hydroelectric power (wind turbine, tidal turbine, turbines) or in the building industry, or for health and medical applications, military and armament applications, sports and leisure, electronics, or solar power plants (mirrors) or photo voltaic power plants (panels).
